(19) Europäisches Patentamt
European Patent Office
Office européen des brevets

(11) **EP 4 258 135 A1**

(12) **EUROPEAN PATENT APPLICATION**
published in accordance with Art. 153(4) EPC

(43) Date of publication:
**11.10.2023 Bulletin 2023/41**

(51) International Patent Classification (IPC):
**G06F 17/16** (2006.01)     **G06F 9/30** (2018.01)

(21) Application number: **21914169.4**

(52) Cooperative Patent Classification (CPC):
**G06F 9/30; G06F 17/16**

(22) Date of filing: **23.12.2021**

(86) International application number:
**PCT/CN2021/141000**

(87) International publication number:
**WO 2022/143432 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020   CN 202011617575
08.02.2021   CN 202110181498**

(71) Applicant: **Huawei Technologies Co., Ltd.
Shenzhen, Guangdong 518129 (CN)**

(72) Inventor: **LIN, Tengyi
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MATRIX CALCULATION APPARATUS, METHOD, SYSTEM, CIRCUIT, CHIP, AND DEVICE**

(57)     A matrix calculation apparatus, method, system, circuit, and device, and a chip are provided, to directly calculate a matrix in a compressed format, thereby improving calculation efficiency of the matrix in the compressed format. The matrix calculation apparatus includes a vector outer product processing engine and an accumulator. The matrix calculation apparatus calculates, based on vector outer products, a first matrix and a second matrix that are in a compressed format. In the calculation process, the vector outer product processing engine performs vector outer product calculation on a first column vector with reserved row coordinates and a second column vector with reserved column coordinates, and then the accumulator accumulates, based on indexes of position coordinates, third element values with same position coordinates to obtain a result matrix obtained by calculating the two matrices in the compressed format. Compared with a conventional method in which a matrix in a compressed format needs to be first decompressed and then matrix calculation is performed on a matrix obtained through decompression, the matrix calculation apparatus provided in embodiments of this application can effectively improve calculation efficiency of a matrix in a compressed format.

FIG. 4A

Description

TECHNICAL FIELD

This application relates to the computer field, and in particular, to a matrix calculation apparatus, method, system, circuit, and device, and a chip.

BACKGROUND

Matrix calculation is an important computing type in different application scenarios such as artificial intelligence, scientific computing, and graphics computing. A matrix is a set of element values arranged according to a rectangular array. The element values in the matrix may include two values: a zero-element value and a non-zero-element value. When there are a large quantity of zero-element values in a matrix, to save storage space, only non-zero-element values in the matrix may be stored, that is, the matrix is compressed, and a matrix in a compressed format is stored.

In a current technology, a frequently-used method for calculating a matrix in a compressed format is as follows: First, the matrix in the compressed format needs to be decompressed. To be specific, the matrix in the compressed format is converted into a matrix in an uncompressed format. Then, matrix calculation is performed on the matrix in the uncompressed format. In the matrix calculation process, because the matrix in the compressed format needs to be decompressed, and data obtained through decompression occupies large memory space, a calculation speed of the matrix is limited by access bandwidth of memory. When the access bandwidth of the memory is fixed, the calculation speed of the matrix cannot be improved, and consequently, calculation efficiency is low.

SUMMARY

This application provides a matrix calculation apparatus, method, system, circuit, and device, and a chip, to directly calculate a matrix in a compressed format without decompressing the matrix in the compressed format, thereby improving calculation efficiency of the matrix in the compressed format.

According to a first aspect, an embodiment of this application provides a matrix calculation apparatus, where the matrix calculation apparatus includes a vector outer product processing engine and an accumulator. The vector outer product processing engine is configured to calculate vector outer products of N first column vectors and N first row vectors, to obtain N intermediate result matrices, where the first column vector includes first element values and row coordinates of the first element values, the first row vector includes second element values and column coordinates of the second element values, the intermediate result matrix includes third element values and position coordinates of the third element values, the position coordinates include the row coordinates of the first element values and the column coordinates of the second element values, the N first column vectors are obtained by converting a first matrix in a compressed format, the N first row vectors are obtained by converting a second matrix in the compressed format, and N is an integer greater than or equal to 1. The accumulator is configured to accumulate, based on indexes of the position coordinates of the third element values, third element values with same position coordinates in the N intermediate result matrices, to obtain a result matrix. In this embodiment of this application, the matrix calculation apparatus calculates the first matrix and the second matrix in the compressed format based on the vector outer products. In the calculation process, row coordinates of element values in the first column vector are reserved, column coordinates of element values in the second column vector are reserved, and then third element values with same position coordinates are accumulated based on indexes of position coordinates, to obtain the result matrix obtained by calculating the two matrices in the compressed format. Compared with a conventional method in which a matrix in a compressed format needs to be first decompressed and then matrix calculation is performed on a matrix obtained through decompression, the matrix calculation method provided in embodiments of this application can effectively improve calculation efficiency of a matrix in a compressed format.

In an optional implementation, the N intermediate result matrices include at least a first intermediate result matrix and a second intermediate result matrix, position coordinates of third element values in the first intermediate result matrix are first position coordinates, and position coordinates of third element values in the second intermediate result matrix are second position coordinates. The accumulator is configured to: write, in a generation sequence of the N intermediate result matrices, the third element values in the first intermediate result matrix into corresponding positions in a cache based on the first position coordinates; and then read, based on the second position coordinates of the third element values in the second intermediate result matrix, cached values that are at positions corresponding to the second position coordinates in the cache, and accumulate the third element values in the second intermediate result matrix and the cached values, to obtain a result matrix in an uncompressed format. In the foregoing optional implementation, the matrix calculation apparatus may output a matrix in an uncompressed format based on different application scenarios, thereby expanding an applicable scenario of the matrix calculation apparatus.

In an optional implementation, the matrix calculation apparatus further includes a matrix compression unit. The matrix compression unit is configured to compress the result matrix in the uncompressed format to obtain a result matrix in a compressed format. In the foregoing optional implementation, the matrix calculation apparatus may output a matrix in a compressed format based on different application scenarios, thereby expanding an applicable scenario of the matrix calculation apparatus. In addition, the matrix calculation apparatus compresses the result matrix, and outputs the matrix in the compressed format, thereby saving transmission resources or facilitating a next calculation operation.

In an optional implementation, the accumulator is further specifically configured to: sort third element values in the N intermediate result matrices based on position coordinates of the third element values, for example, sort the third element values based on row coordinates of the third element values, or sort the third element values based on column coordinates of the third element values; and then compare position coordinates in N intermediate result matrices obtained through sorting, add up third element values with same position coordinates, and delete position coordinates of a zero-element value, to obtain a result matrix in a compressed format. In the foregoing optional implementation, the matrix in the compressed format may be directly obtained, and the matrix in the compressed format output by the matrix calculation apparatus may be used in some application scenarios in which a matrix in a compressed format is required for subsequently calculation. In addition, because the matrix calculation apparatus outputs the matrix in the compressed format, transmission resources of a subsequent transmission matrix can be reduced.

In an optional implementation, the matrix calculation apparatus further includes a format conversion unit. The format conversion unit is configured to: obtain the first matrix and the second matrix; convert the first matrix into the N first column vectors and reserve the row coordinates of the first element values in the first column vectors; and convert the second matrix into the N first row vectors and reserve the column coordinates of the first element values in the first row vectors. In this way, the matrix calculation apparatus can calculate the two matrices in the compressed format based on the vector outer products.

In an optional implementation, the matrix calculation apparatus further includes the format conversion unit. The format conversion unit is further configured to: obtain a fifth matrix and a sixth matrix, perform format conversion on the fifth matrix to obtain the first matrix, and perform format conversion on the sixth matrix to obtain the second matrix, where at least one of the fifth matrix and the sixth matrix is a matrix in an uncompressed format. In the foregoing optional implementation, the matrix calculation apparatus may receive the matrix in the uncompressed format, and then convert the matrix in the uncompressed format into the matrix in the compressed format, so that the matrix calculation apparatus can support calculation of matrices in a plurality of formats.

In an optional implementation, the matrix calculation apparatus further includes the format conversion unit. The format conversion unit is further configured to split the first column vector into X second column vectors, and split the first row vector into X second row vectors, where precision of element values included in the second column vector and the second row vector is second precision, precision of element values included in the first column vector and the first row vector is first precision, the first precision is higher than the second precision, and X is an integer greater than or equal to 2. The vector outer product processing engine is further configured to calculate vector outer products of the X second column vectors and the X second row vectors to obtain $X^2$ fourth matrices, where the fourth matrix includes fourth element values and position coordinates of the fourth element values, the position coordinates of the fourth element values include the row coordinates of the first element values and the column coordinates of the second element values, and precision of the fourth element values is the first precision. Then, the accumulator is further configured to accumulate, based on indexes of the position coordinates of the fourth element values, fourth element values with same position coordinates in the $X^2$ fourth matrices, to obtain the intermediate result matrix, where precision of the third element values in the intermediate result matrix is the first precision. In the foregoing optional implementation, the matrix calculation apparatus may implement high-precision matrix calculation based on a low-precision matrix calculation apparatus, thereby improving applicability of the matrix calculation unit.

According to a second aspect, an embodiment of this application provides a matrix calculation method, where the method is applied to a matrix calculation apparatus, and the method includes: first, obtaining a first calculation instruction, where the first calculation instruction includes N first column vectors and N first row vectors; then, calculating vector outer products of the N first column vectors and the N first row vectors, to obtain N intermediate result matrices, where the first column vector includes first element values and row coordinates of the first element values, the first row vector includes second element values and column coordinates of the second element values, the intermediate result matrix includes third element values and position coordinates of the third element values, the position coordinates include the row coordinates of the first element values and the column coordinates of the second element values, the N first column vectors are obtained by converting a first matrix in a compressed format, the N first row vectors are obtained by converting a second matrix in the compressed format, and N is an integer greater than or equal to 1; and finally, accumulating, based on indexes of the position coordinates of the third element values, third element values with same position coordinates in the N intermediate result matrices, to obtain a result matrix. In this embodiment of this application, the first matrix and the second matrix are calculated based on the vector outer products of the N first column vectors and the N first row vectors. In the calculation process, row coordinates of element values in the first column vector are reserved, column coordinates of element values in the second column vector are reserved, and then third element values with same position coordinates are accumulated based on indexes of position coordinates, to obtain the result matrix obtained by calculating the two matrices in the compressed format. Compared with a conventional method in which a matrix in a compressed format needs to be first decompressed and then matrix calculation is performed on a matrix obtained through decompression, the matrix calculation apparatus provided in embodiments of this application can effectively improve calculation efficiency of a matrix in a compressed format.

In an optional implementation, the N intermediate result matrices include at least a first intermediate result matrix and a second intermediate result matrix, position coordinates of third element values in the first intermediate result matrix are first position coordinates, and position coordinates of third element values in the second intermediate result matrix are second position coordinates. In the method, the accumulating, based on indexes of the position coordinates of the third element values, third element values with same position coordinates in the N intermediate result matrices, to obtain a result matrix may specifically include: first, writing, in a generation sequence of the N intermediate result matrices, the third element values in the first intermediate result matrix into corresponding positions in a cache based on the first position coordinates; and then reading, based on the second position coordinates of the third element values in the second intermediate result matrix, cached values that are at positions corresponding to the second position coordinates in the cache, and accumulating the third element values in the second intermediate result matrix and the cached values, to obtain a result matrix in an uncompressed format. In the foregoing optional implementation, the matrix calculation apparatus may output a matrix in an uncompressed format based on different application scenarios, thereby expanding an applicable scenario of the matrix calculation apparatus.

In an optional implementation, the method further includes: compressing the result matrix in the uncompressed format to obtain a result matrix in a compressed format. In the foregoing optional implementation, the matrix calculation apparatus may output a matrix in a compressed format based on different application scenarios, thereby expanding an applicable scenario of the matrix calculation apparatus. In addition, the matrix calculation apparatus compresses the result matrix, and outputs the matrix in the compressed format, thereby saving transmission resources or facilitating a next calculation operation.

In an optional implementation, in the method, the accumulating, based on indexes of the position coordinates of the third element values, third element values with same position coordinates in the N intermediate result matrices, to obtain a result matrix may specifically include: first, sorting third element values in the N intermediate result matrices based on position coordinates of the third element values, for example, sorting the third element values based on row coordinates of the third element values, or sorting the third element values based on column coordinates of the third element values; and comparing position coordinates in N intermediate result matrices obtained through sorting, adding up third element values with same position coordinates, and deleting position coordinates of a zero-element value, to obtain a result matrix in a compressed format. In the foregoing optional implementation, the matrix in the compressed format may be directly obtained, and the matrix in the compressed format output by the matrix calculation apparatus may be used in some application scenarios in which a matrix in a compressed format is required for subsequently calculation. In addition, because the matrix calculation apparatus outputs the matrix in the compressed format, transmission resources of a subsequent transmission matrix can be reduced.

In an optional implementation, before the obtaining a first calculation instruction, the method further includes: obtaining a second calculation instruction, where the second calculation instruction includes the first matrix and the second matrix; and converting the first matrix into the N first column vectors and reserving the row coordinates of the first element values in the first column vectors; and converting the second matrix into the N first row vectors and reserving the column coordinates of the first element values in the first row vectors. In this way, the matrix calculation apparatus can calculate the two matrices in the compressed format based on the vector outer products.

In an optional implementation, before the obtaining a second calculation instruction, the method further includes: obtaining a third calculation instruction, where the third calculation instruction includes a fifth matrix and a sixth matrix, and at least one of the fifth matrix and the sixth matrix is a matrix in an uncompressed format; and then performing format conversion on the fifth matrix to obtain the first matrix in the compressed format, and performing format conversion on the sixth matrix to obtain the second matrix. In the foregoing optional implementation, the matrix calculation apparatus may receive the matrix in the uncompressed format, and then convert the matrix in the uncompressed format into the matrix in the compressed format, so that the matrix calculation apparatus can support calculation of matrices in a plurality of formats.

In an optional implementation, the first column vector may be first split into X second column vectors, and the first row vector is split into X second row vectors, where precision of element values included in the second column vector and the second row vector is second precision, precision of element values included in the first column vector and the first row vector is first precision, the first precision is higher than the second precision, and X is an integer greater than or equal to 2. In the method, the calculating vector outer products of the N first column vectors and the N first row vectors, to obtain N intermediate result matrices may include: calculating vector outer products of the X second column vectors and the X second row vectors to obtain $X^2$ fourth matrices, where the fourth matrix includes fourth element values and position coordinates of the fourth element values, the position coordinates of the fourth element values include the row coordinates of the first element values and the column coordinates of the second element values, and precision of the fourth element values is the first precision; and then, accumulating, based on indexes of the position coordinates of the fourth element values, fourth element values with same position coordinates in the $X^2$ fourth matrices, to obtain the intermediate result matrix, where precision of the third element values in the intermediate result matrix is the first precision. In the foregoing optional implementation, the matrix calculation apparatus may implement high-precision matrix calculation based on a low-precision matrix calculation apparatus, thereby improving applicability of the matrix calculation unit.

According to a third aspect, a matrix calculation circuit is provided. The matrix calculation circuit is configured to perform operation steps of the matrix calculation method according to any one of the second aspect or the possible implementations of the second aspect.

According to a fourth aspect, a matrix calculation system is provided. The system includes a processor and a matrix calculation apparatus. The processor is configured to send a calculation instruction to the matrix calculation apparatus. The matrix calculation apparatus is configured to perform operation steps of the matrix calculation method according to any one of the second aspect or the possible implementations of the second aspect.

According to a fifth aspect, a chip is provided. The chip includes a processor, a matrix calculation apparatus is integrated into the processor, and the matrix calculation apparatus is configured to perform operation steps of the matrix calculation method according to any one of the second aspect or the possible implementations of the second aspect.

According to a sixth aspect, a matrix calculation device is provided. The device includes the matrix calculation system according to the fourth aspect or the chip according to the fifth aspect.

According to a seventh aspect, a readable storage medium is provided. The readable storage medium stores instructions. When the readable storage medium runs on a device, the device is enabled to perform operation steps of the matrix calculation method according to any one of the second aspect or the possible implementations of the second aspect.

According to an eighth aspect, a computer program product is provided. When the computer program product runs on a computer, the computer is enabled to perform operation steps of the matrix calculation method according to any one of the second aspect or the possible implementations of the second aspect.

It may be understood that any apparatus, computer storage medium, or computer program product for implementing the matrix calculation method provided above is configured to perform the corresponding method provided above. Therefore, for beneficial effects that can be achieved by the apparatus, the computer storage medium, or the computer program product, refer to beneficial effects of the corresponding method provided above. Details are not described herein again.

In this application, based on the implementations according to the foregoing aspects, the implementations may be further combined to provide more implementations.

## BRIEF DESCRIPTION OF DRAWINGS

FIG. 1A is a schematic diagram of a matrix in a COO compressed format according to an embodiment of this application;

FIG. 1B is a schematic diagram of a matrix in a CSR compressed format according to an embodiment of this application;

FIG. 1C is a schematic diagram of a matrix in a CSC compressed format according to an embodiment of this application;

FIG. 2 is a schematic diagram of a structure of a computing device according to an embodiment of this application;

FIG. 3 is a schematic diagram of a structure of a processor according to an embodiment of this application;

FIG. 4A is a schematic diagram of a structure of a matrix calculation apparatus according to an embodiment of this application;

FIG. 4B is a schematic diagram of a structure of a vector outer product processing engine according to an embodiment of this application;

FIG. 4C is a schematic diagram of a structure of a MAC operation subunit according to an embodiment of this application;

FIG. 4D is a schematic diagram of a structure of an accumulator according to an embodiment of this application;

FIG. 4E is a schematic diagram of a structure of an adder according to an embodiment of this application;

FIG. 5A is a schematic diagram in which a matrix calculation apparatus converts a first matrix into N first column vectors and a second matrix into a plurality of first row vectors according to an embodiment of this application;

FIG. 5B is a schematic diagram in which a matrix calculation apparatus performs outer product calculation on N first column vectors and N first row vectors to obtain N intermediate result matrices according to an embodiment of this application;

FIG. 5C is a schematic diagram of element values and position coordinates in a first intermediate result matrix according to an embodiment of this application;

FIG. 5D is a schematic diagram of element values and position coordinates in a second intermediate result matrix according to an embodiment of this application;

FIG. 5E is a schematic diagram in which a matrix calculation apparatus accumulates third element values with same position coordinates in N intermediate result matrices to obtain a result matrix according to an embodiment of this application;

FIG. 6 is a schematic diagram of an implementation of accumulating third element values with same position coordinates in N intermediate result matrices to obtain a result matrix according to an embodiment of this application;

FIG. 7 is a schematic diagram of a structure of another matrix calculation apparatus according to an embodiment of this application;

FIG. 8 is a schematic diagram of another implementation of accumulating third element values with same position coordinates in N intermediate result matrices to obtain a result matrix according to an embodiment of this application;

FIG. 9 is a schematic diagram in which a format conversion unit converts a matrix in an uncompressed format into a matrix in a compressed format according to an embodiment of this application;

FIG. 10 is a schematic diagram of dividing an integer number of first precision into a plurality of integer numbers of second precision according to an embodiment of this application;

FIG. 11 is a schematic diagram of splitting a first column vector of first precision into a plurality of second column vectors of second precision and a first row vector of the first precision into a plurality of second row vectors of the second precision according to an embodiment of this application;

FIG. 12 is a schematic diagram in which a matrix calculation apparatus performs outer product calculation on a second row vector and a second column vector to obtain a fourth matrix according to an embodiment of this application;

FIG. 13 is a schematic flowchart of steps of an embodiment of a matrix calculation method according to an embodiment of this application; and

FIG. 14 is a schematic flowchart of steps of another embodiment of a matrix calculation method according to an embodiment of this application.

## DESCRIPTION OF EMBODIMENTS

The following describes the technical solutions in embodiments of this application with reference to the accompanying drawings in embodiments of this application. In the specification, claims, and accompanying drawings of this application, the terms "first", "second", and the like are intended to distinguish between similar objects but do not necessarily indicate a specific order or sequence.

To better understand this application, related terms in this application are first described.

Matrix (matrix): A matrix whose dimension is $m \times n$ is a rectangular array obtained by arranging elements of $m$ rows (rows) and $n$ columns (columns). For example, a matrix A is shown in Formula (1), and a matrix B is shown in Formula (2):

$$A = \begin{bmatrix} a_{11} & a_{12} & \ldots & a_{1n} \\ a_{21} & a_{22} & \ldots & a_{2n} \\ \ldots & \ldots & \ldots & \ldots \\ a_{m1} & a_{m2} & \ldots & a_{mn} \end{bmatrix} \quad \text{Formula (1)}$$

$$B = \begin{bmatrix} b_{11} & b_{12} & \ldots & b_{1n} \\ b_{21} & b_{22} & \ldots & b_{2n} \\ \ldots & \ldots & \ldots & \ldots \\ b_{m1} & b_{m2} & \ldots & b_{mn} \end{bmatrix} \quad \text{Formula (2)}$$

Matrix addition and subtraction: Mutual addition and subtraction may be performed between matrices of a same dimension, and specifically, addition and subtraction are performed on elements at all positions. For example, both the matrix A and the matrix B are matrices in an $m \times n$ dimension, the matrix A and the matrix B are added to obtain a matrix C, and the matrix C is shown in Formula (3):

$$C = A + B = \begin{bmatrix} a_{11} + b_{11} & a_{12} + b_{12} & ... & a_{1n} + b_{1n} \\ a_{21} + b_{21} & a_{22} + b_{22} & ... & a_{2n} + b_{2n} \\ ... & ... & ... & ... \\ a_{m1} + b_{m1} & a_{m2} + b_{m2} & ... & a_{mn} + b_{mn} \end{bmatrix} \quad \text{Formula (3)}$$

Matrix multiplication: Two matrices can be multiplied only when a quantity of columns (columns) of a first matrix A is equal to a quantity of rows (rows) of the other matrix. For example, the matrix A is a matrix whose dimension is $m \times n$, the matrix B is a matrix whose dimension is $n \times p$, a product of the matrix A and the matrix B is an $m \times p$ matrix, and an element in the matrix $m \times p$ is shown in Formula (4):

$$[ab]_{i,j} = a_{i,1}b_{1,j} + a_{i,2}b_{2,j} + ... + a_{i,n}b_{n,j} = \sum_{r=1}^{n} a_{i,r}b_{r,j} \quad \text{Formula (4),}$$

where $1 \leq i \leq m$ and $1 \leq j \leq p$.

A row vector (row vector) is a matrix whose dimension is $1 \times m$, where $m$ is a positive integer. For example, a row vector is shown in Formula (5):

$$X = \begin{bmatrix} x_1 & x_2 & ... & x_m \end{bmatrix} \quad \text{Formula (5)}$$

A column vector (column vector) is a matrix whose dimension is $m \times 1$, and $m$ is a positive integer. For example, a column vector is shown in Formula (6):

$$X = \begin{bmatrix} x_1 \\ x_2 \\ \vdots \\ x_m \end{bmatrix} \quad \text{Formula (6)}$$

A vector outer product (vector outer product) is a tensor product of two vectors. The tensor product is a matrix. For example, a column vector U whose dimension is $m \times 1$ and a row vector V whose dimension is $1 \times n$ are given. An outer product $U \times V$ of the vector U and the vector V is defined as a matrix D whose dimension is $m \times n$, and the matrix D is shown in Formula (7):

$$U \otimes V = \begin{bmatrix} u_1 \\ u_2 \\ u_3 \\ u_4 \end{bmatrix} \otimes \begin{bmatrix} v_1 & v_2 & v_3 \end{bmatrix} = \begin{bmatrix} v_1u_1 & v_2u_1 & v_3u_1 \\ v_1u_2 & v_2u_2 & v_3u_2 \\ v_1u_3 & v_2u_3 & v_3u_3 \\ v_1u_4 & v_2u_4 & v_3u_4 \end{bmatrix} \quad \text{Formula (7)}$$

Matrix in a compressed format: When a matrix includes zero-element values and non-zero-element values, usually, the non-zero-element values in the matrix may be stored in a specific format and the zero-element values are not stored, to save storage space. In this process, the matrix is compressed, and a matrix obtained after compression and storage is referred to as a matrix in a compressed format. A method for compressing a matrix includes but is not limited to coordinate (coordinate, COO), compressed sparse row (compressed sparse row, CSR), compressed sparse column (compressed sparse column, CSC), and the like.

The following separately uses examples to describe the three compression methods: COO, CSR, and CSC.

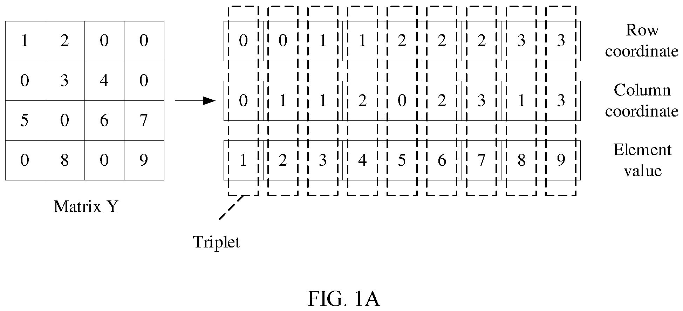

COO: A matrix is represented by a triplet. The triplet includes three values: a row number, a column number, and an element value. The row number and the column number are for identifying a position of the element value. For example, the triplet is (row number, column number, element value), or the triplet is (element value, row number, column number). Specifically, an arrangement sequence of the three values in the triplet is not limited. For example, refer to FIG. 1A. FIG. 1A shows a matrix Y whose dimension is $4\times4$. The matrix includes zero-element values and non-zero-element values. The non-zero-element values are 1, 2, 3, 4, 5, 6, 7, 8, and 9. For example, a position of the non-zero-element value "1" is row 0 column 0, and the triplet is represented as (0, 0, 1). A position of the non-zero-element value "2" is row 0 column 1, and the triplet is represented as (0, 1, 2). A position of the non-zero-element value "3" is row 1 column 1, and the triplet is represented as (1, 1, 3). Not all element values are described in detail herein. For example, triplet forms of a matrix in a compressed format are (0, 0, 1), (0, 1, 2), (1, 1, 3), (1, 2, 4), (2, 0, 5), (2, 2, 6), (2, 3, 7), (3, 1, 8), and (3, 3, 9).

Optionally, the matrix Y in the compressed format may be represented in Formula (8):

$$\text{Row coordinate} = \left(\left[0,0,1,1,2,2,2,3,3\right]\right)$$

$$\text{Column coordinate} = \left(\left[0,1,1,2,0,2,3,1,3\right]\right) \quad \text{Formula (8)}$$

$$\text{Element value} = \left(\left[1,2,3,4,5,6,7,8,9\right]\right)$$

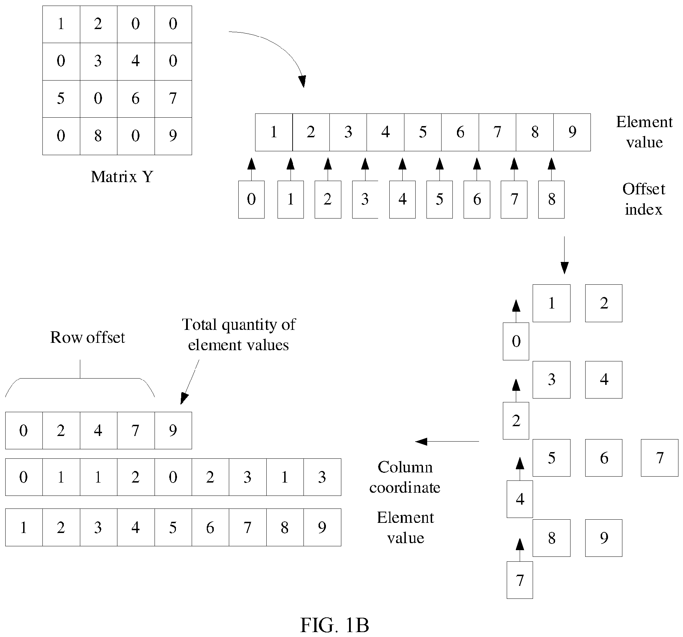

CSR: A matrix is represented by three types of data: an element value, a column number, and a row offset. The element value and the column number in CSR are represented in manners similar to the element value and the column number in the COO method described above. CSR is different from the COO method in that the row offset indicates a start offset position of the 1st element in a row in all element values. Refer to FIG. 1B. First, non-zero-element values in a matrix Y shown in FIG. 1B are arranged by row, to obtain all element values: 1, 2, 3, 4, 5, 6, 7, 8, and 9. The 1st non-zero-element value in the first row is "1", and an offset of the element value "1" in all the element values is "0". Similarly, the 1st non-zero-element value in the second row is "3", and an offset of the element value "3" in all the element values is "2". The 1st non-zero-element value in the third row is "5", and an offset of the element value "5" in all the element values is "4". The 1st non-zero-element value in the fourth row is "8", and an offset of the element value "8" in all the element values is "7". Finally, a total quantity (for example, "9") of non-zero-element values in the matrix is padded at the end of a row to which the row offset belongs.

The matrix Y in the compressed format may be represented in Formula (9):

$$\text{Row offset} = \left(\left[0,2,4,7,9\right]\right)$$

$$\text{Column coordinate} = \left(\left[0,1,1,2,0,2,3,1,3\right]\right) \quad \text{Formula (9)}$$

$$\text{Element value} = \left(\left[1,2,3,4,5,6,7,8,9\right]\right)$$

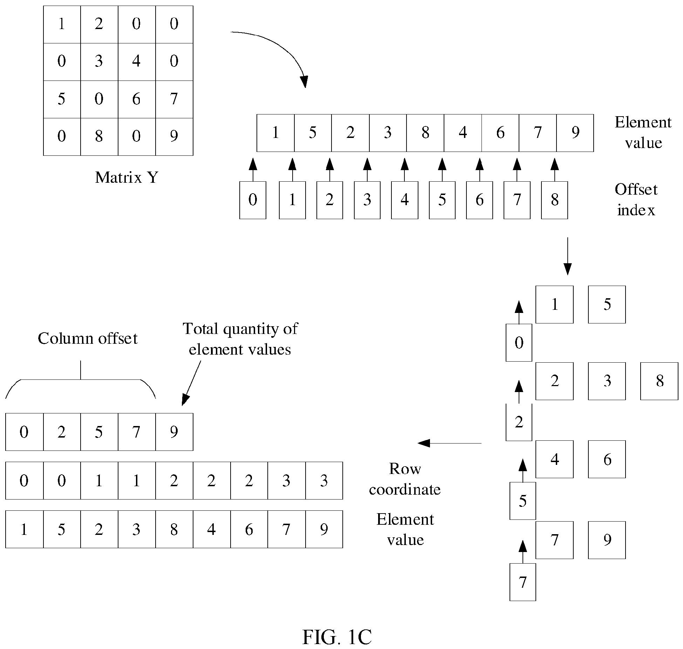

CSC: A matrix is represented by three types of data: an element value, a row number, and a column offset. The element value and the row number in CSR are represented in manners similar to the element value and the row number in the COO method described above. CSC is different from the COO method in that the column offset indicates a start offset position of the 1 st element in a column in all element values. Refer to FIG. 1C. First, non-zero-element values in a matrix Y shown in FIG. 1C are arranged by column, to obtain all element values: 1, 5, 2, 3, 8, 4, 6, 7, and 9. The 1st non-zero-element value in the first column is "1", and an offset of the element value "1" in all the element values is "0". Similarly, the 1st non-zero-element value in the second column is "5", and an offset of the element value "5" in all the element values is "2". The 1st non-zero-element value in the third column is "2", and an offset of the element value "2" in all the element values is "5". The 1st non-zero-element value in the fourth column is "3", and an offset of the element value "3" in all the element values is "7". Finally, a total quantity (for example, "9") of non-zero-element values in the matrix is padded at the end of a row to which the column offset belongs.

The matrix Y in the compressed format may be represented in Formula (10):

$$\text{Column offset} = \left(\left[0,2,5,7,9\right]\right)$$

$$\text{Row coordinate} = \left(\left[0,0,1,1,2,2,2,3,3\right]\right) \quad \text{Formula (10)}$$

$$\text{Element value} = \left(\left[1,5,2,3,8,4,6,7,9\right]\right)$$

It can be learned from the descriptions of the foregoing three matrix compression methods that, each element value in the matrix in the COO compressed format has a corresponding row coordinate (row number) and a corresponding column coordinate (column number), each element value in the matrix in the CSR compressed format has a corresponding column coordinate, and each element value in the matrix in the CSC compressed format has a corresponding row coordinate.

Matrix in an uncompressed format: Refer to the matrix Y shown in FIG. 1A. A matrix in an uncompressed format includes zero-element values and non-zero-element values. It should be noted that, usually, the matrix in the compressed format is also referred to as a sparse matrix, and the matrix in the uncompressed format may also be referred to as a dense matrix.

Numeric type: In the computer field, numeric types include an integer and a float. The integer mainly indicates an integer number, and the float mainly indicates a decimal. Integer precision includes int2, int4, int8, int16, int32, and the like. int represents an integer function, and a numerical digit added after int represents a quantity of bits (bits) of a binary value range, and a bit (bit) is 0 or 1. For example, a binary value range for int4 is 4 bits (0000 to 1111), and a converted decimal value range is (-8, 7). Similarly, a binary value range for int8 is $(-2^7, 2^7-1)$. A unit of a computer storage capacity is 1 byte, namely, 8 bits. Therefore, correspondingly, there is 1 byte for int8 and 2 bytes for int16. A binary value range for int16 occupies 2 bytes, and a converted decimal value range is (-32768, 32767). A binary value range for int32 occupies 4 bytes, and a converted decimal value range is (-2147483648, 2147483647).

An integer matrix is a matrix that uses integer numbers as elements. For example, an integer matrix with m rows and n columns includes m×n elements, and the m×n elements are integer numbers. The integer number may be of precision such as int2, int4, int8, int16, or int32. For example, the integer matrix may alternatively include matrices in different integer formats, for example, a matrix including integer numbers in an int8 format, a matrix including integer numbers in an int16 format, and a matrix including integer numbers in an int32 format.

A floating-point (floating-point, FP) mainly represents a decimal number, and usually includes three parts: a sign (sign) bit, an exponent (exponent) field, and a mantissa (mantissa) field. The exponent field may also be referred to as an exponent field. The sign bit may be 1 bit (bit), and the exponent field and the mantissa field may be a plurality of bits (bits). The floating-point may usually include a plurality of formats (format), such as a half-precision floating-point, a single-precision floating-point, and a double-precision floating-point in the IEEE 754 standard. The half-precision floating-point (half-precision floating-point) occupies 16 bits (that is, occupies 2 bytes) in a computer memory, and may also be referred to as FP16 for short. An absolute value range of a value that can be represented by the half-precision floating-point is approximately $[6.10 \times 10^{-5}, 6.55 \times 10^4]$. The single-precision floating-point (single-precision floating-point) occupies 32 bits (that is, 4 bytes) in the computer memory, and may also be referred to as FP32 for short. An absolute value range of a value that can be represented by the single-precision floating-point is approximately $[1.18 \times 10^{-38}, 3.40 \times 10^{38}]$. The double-precision floating-point (double precision floating point) occupies 64 bits (that is, occupies 8 bytes) in the computer memory, and may also be referred to as FP64 for short. The double-precision floating-point may represent a 15-digit or 16-digit decimal number. An absolute value range of a value that can be represented by the double-precision floating-point is approximately $[2.23 \times 10^{-308}, 1.80 \times 10^{308}]$.

Table 1 below shows a storage format of the foregoing three types of floating-points. In the 16 bits occupied by FP16, a sign bit occupies 1 bit, an exponent occupies 5 bits, and a mantissa field occupies 10 bits. In the 32 bits occupied by FP32, a sign bit occupies 1 bit, an exponent occupies 8 bits, and a mantissa field occupies 23 bits. In the 64 bits occupied by FP64, a sign bit occupies 1 bit, an exponent occupies 11 bits, and a mantissa field occupies 52 bits.

**Table 1**

|  | Sign bit | Exponent field (exponent) | Mantissa field |
|---|---|---|---|
| FP16 | 1 bit | 5 bits | 10 bits |
| FP32 | 1 bit | 8 bits | 23 bits |
| FP64 | 1 bit | 11 bits | 52 bits |

The floating-point matrix may be a matrix that uses floating-points as elements. For example, a floating-point matrix with m rows and n columns includes m×n elements, and the m×n elements may be floating-points. Similar to the floating-point, the floating point matrix may also include matrices in different floating-point formats, for example, a matrix including floating-points in an FP16 format, a matrix including floating-points in an FP32 format, and a matrix including floating-points in an FP64 format.

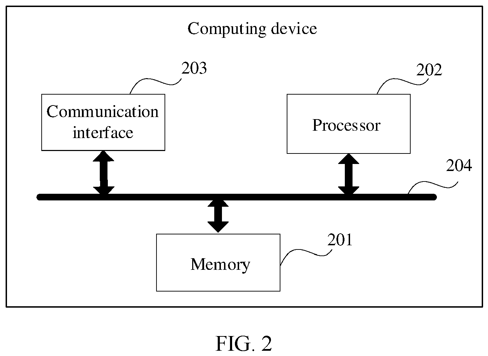

FIG. 2 is a schematic diagram of a structure of a computing device according to an embodiment. The computing device may be a device having a computation capability, such as a terminal, a network device, or a server. Refer to FIG. 2. The computing device may include a memory 201, a processor 202, a communication interface 203, and a bus 204. The memory 201, the processor 202, and the communication interface 203 are connected to each other by using the bus 204.

The memory 201 may be configured to store data, a software program, and a module, and mainly includes a program storage area and a data storage area. The program storage area may store an operating system, a software application required by at least one function, middleware, and the like. The data storage area may store data created when the device is used, and the like. For example, the operating system may include a Linux operating system, a Unix operating system, a Window operating system, or the like. The software application required by the at least one function may include an application related to artificial intelligence (artificial intelligence), an application related to high-performance computing (high-performance computing, HPC), an application related to deep learning (deep learning), an application related to scientific computing, or the like. The middleware may include a linear algebra library function or the like. In a possible example, the memory 201 includes but is not limited to a static random access memory (static RAM, SRAM), a dynamic random access memory (dynamic RAM, DRAM), a synchronous dynamic random access memory (synchronous DRAM, SDRAM), a high-speed random access memory, or the like. Further, the memory 201 may further include another non-volatile memory, for example, at least one magnetic disk storage device, a flash storage device, or another volatile solid-state storage device.

In addition, the processor 202 is configured to control and manage an operation of the computing device, for example, perform various functions of the computing device and process data by running or executing a software program and/or a module that are/is stored in the memory 201 and invoking data stored in the memory 201. In a possible example, the processor 202 includes but is not limited to a central processing unit (central processing unit, CPU), a network processing unit (network processing unit, NPU), a graphics processing unit (graphics processing unit, GPU), an application-specific integrated circuit (application-specific integrated circuit, ASIC), a field programmable gate array (field programmable gate array, FPGA) or another programmable logic device, a transistor logic device, a logic circuit, or any combination thereof. The processor may implement or execute various example logical blocks, modules, and circuits described with reference to content disclosed in this application. Alternatively, the processor 202 may be a combination for implementing a computation function, for example, a combination of one or more microprocessors, or a combination of a digital signal processor and a microprocessor.

The communication interface 203 is configured to implement communication between the computing device and an external device. The communication interface 203 may include an input interface and an output interface. The input interface may be configured to obtain a first matrix and a second matrix in a compressed format in the following embodiments. In some feasible embodiments, there may be only one input interface, or there may be a plurality of input interfaces. The output interface may be configured to output a result matrix in the following embodiments. In some feasible embodiments, the result matrix may be directly output by the processor, or may be first stored in the memory and then output from the memory. In some other feasible embodiments, there may be only one output interface, or there may be a plurality of output interfaces.

The bus 204 may be a peripheral component interconnect (Peripheral Component Interconnect Express, PCIe) bus, an extended industry standard architecture (extended industry standard architecture, EISA) bus, or the like. The bus 204 may be classified into an address bus, a data bus, a control bus, and the like. For ease of representation, only one thick line is used to represent the bus in FIG. 2, but this does not mean that there is only one bus or only one type of bus.

In this embodiment, the processor 202 may include a matrix calculation apparatus. The matrix calculation apparatus may be an ASIC, an FPGA, a logic circuit, or the like. Certainly, the apparatus may alternatively be implemented by using software. This is not specifically limited in this embodiment of this application. The matrix calculation apparatus may be configured to compute a matrix related to artificial intelligence, scientific computing, graphics computing, and the like.

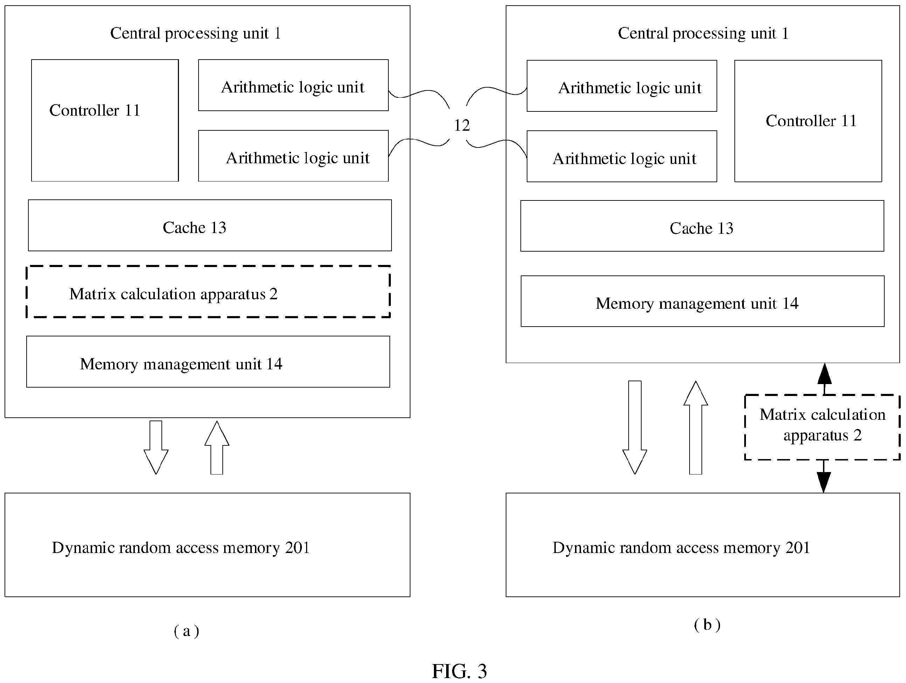

Further, the processor 202 may alternatively include one or more of other processing units such as a CPU, a GPU, or an NPU. As shown in FIG. 3, an example in which the processor 202 includes a CPU 1 and a matrix calculation apparatus 2 is used. The matrix calculation apparatus 2 may be integrated with the CPU 1 (for example, the matrix calculation apparatus 2 is integrated inside an SoC in which the CPU 1 is located), or may be disposed in parallel with the CPU 1 separately (for example, the matrix calculation apparatus 2 is disposed in a form of a PCIe card), as specifically shown in (a) in FIG. 3 and (b) in FIG. 3. Further, the CPU 1 may further include a controller (controller) 11, one or more arithmetic logic units (arithmetic logic units, ALUs) 12, a cache (cache) 13, a memory management unit (memory management unit, MMU) 14, and the like. In FIG. 3, an example in which the memory 201 is a dynamic random access memory DRAM is used for description.

In this embodiment of this application, the matrix calculation apparatus can calculate a matrix in a compressed format. When performing multiplication calculation on two matrices in a compressed format, the matrix calculation apparatus first obtains N first column vectors converted from one of the matrices, where the first column vector includes first element values and row coordinates of the first element values, and obtains N first row vectors converted from the other matrix, where the first row vector includes second element values and column coordinates of the second element values. The matrix calculation apparatus calculates vector outer products of the N first column vectors and the N first row vectors, to obtain N intermediate result matrices. The intermediate result matrix includes element values and position coordinates corresponding to the element values, and the position coordinates include the row coordinates of the first element values and the column coordinates of the second element values. The matrix calculation apparatus can accumulate, based on indexes of the position coordinates, third element values with same position coordinates in the N intermediate result matrices, and then obtain a result matrix. In this embodiment of this application, the matrix calculation apparatus calculates a first matrix and a second matrix based on vector outer products. In the calculation process, row coordinates of element values in the first column vector are reserved, column coordinates of element values in the second column vector are reserved, and then third element values with same position coordinates are accumulated based on indexes of position coordinates, to obtain the result matrix obtained by calculating the two matrices in the compressed format. Compared with a conventional method in which a matrix in a compressed format needs to be first decompressed and then matrix calculation is performed on a matrix obtained through decompression, the matrix calculation apparatus provided in embodiments of this application can effectively improve calculation efficiency of a matrix in a compressed format.

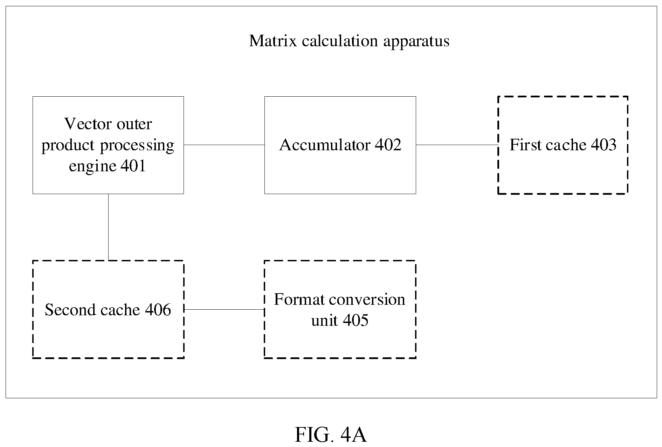

An embodiment of this application provides a matrix calculation apparatus. Refer to FIG. 4A. The matrix calculation apparatus includes a vector outer product processing engine 401 and an accumulator 402. Optionally, the matrix calculation apparatus includes a first cache 403, and the vector outer product processing engine 401, the accumulator 402, and the first cache 403 are sequentially connected. The first cache 403 may be a first cache 403 (for example, a register) in the matrix calculation apparatus, or the first cache 403 may be a cache 13 in the central processing unit 1 shown in FIG. 3. Optionally, the matrix calculation apparatus further includes a format conversion unit 405 and a second cache 406. A function of the format conversion unit 405 may be implemented by the central processing unit 1 in FIG. 3, or a function of the format conversion unit 405 may be implemented by a logic circuit in the matrix calculation apparatus. The second cache 406 may be a register in the matrix calculation apparatus, or the second cache 406 may be the cache 13 in the central processing unit 1 shown in FIG. 3.

The format conversion unit 405 is configured to: convert a first matrix in a compressed format into N first column vectors, and convert a second matrix in the compressed format into N first row vectors, where the first column vector includes first element values and row coordinates of the first element values, and the first row vector includes second element values and column coordinates of the second element values.

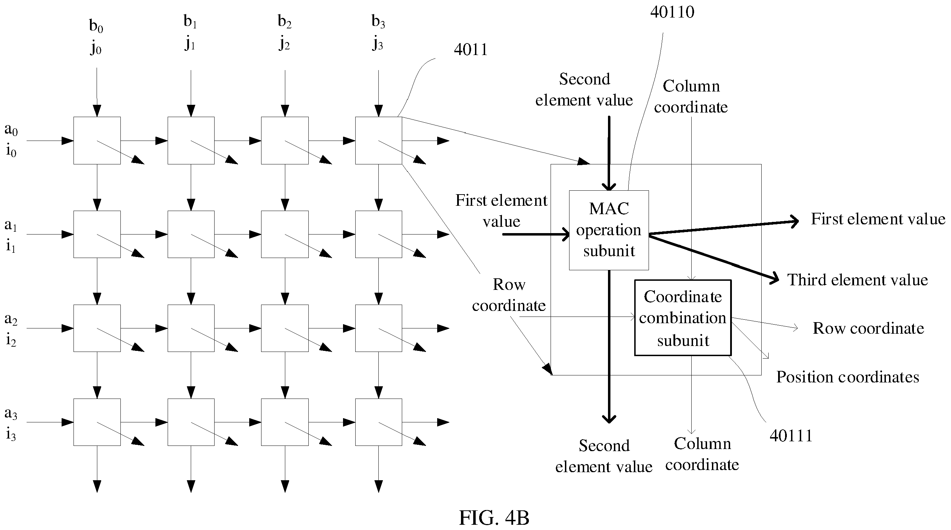

Optionally, the following describes a structure of the vector outer product processing engine 401. Refer to FIG. 4B. FIG. 4B is a schematic diagram of the structure of the vector outer product processing engine 401. The vector outer product processing engine 401 includes a plurality of processing elements (processing elements, PEs) 4011, the plurality of PEs 4011 are a two-dimensional array, and each PE 4011 includes a multiply accumulate (multiply accumulate, MAC) operation subunit 40110 and a coordinate combination subunit 40111. Each PE receives two groups of input data and outputs one group of data. Each group of input data includes one value (value) and one coordinate (index). One group of input data includes a first element value and a row coordinate corresponding to the first element value, and the other group of input data includes a second element value and a column coordinate corresponding to the second element value.

Each PE has two functions. One function is that each PE 4011 receives two groups of input data, and outputs one group of output data based on the groups of input data. The output data includes a third element value and position coordinates of the third element value, where the third element value is obtained by performing a multiplication operation on the first element value and the second element value. The position coordinates are obtained by combining a first row coordinate and a first column coordinate. For example, a PE in row 0 column 0 in a PE array is used as an example. One group of input data is a first element value (for example, $a_0$) in a first row vector and a row coordinate (for example, $i_0$) corresponding to the first element value. The other group of input data is a second element value (for example, $b_0$) in a first column vector and a column coordinate (for example, $j_0$) corresponding to the second element value. The MAC operation subunit 40110 is configured to: receive the first element value and the second element value, perform multiplication calculation on the first element value and the second element value, and then output a product (that is, a third element value) of the first element value and the second element value. The coordinate combination subunit 40111 is configured to: receive the row coordinate of the first element value and the column coordinate of the second element value, and combine the row coordinate and the column coordinate to obtain the position coordinates. Data output by a PE includes a third coordinate value and position coordinates corresponding to the third coordinate value.

The other function of the PE is that the PE needs to transmit a first element value and a column coordinate corresponding to the first element value to a next PE in a row direction, and the PE needs to transmit a second element value and a row coordinate corresponding to the second element value to a next PE in a column direction. For example, after the $1^{st}$ clock cycle, the $1^{st}$ PE (that is, the PE in row 0 column 0) in the PE array transmits $a_0$ and $i_0$ to a next PE in the row direction (for example, a PE in row 0 column 1), and transmits $b_0$ and $j_0$ to a next PE in the column direction (that is, a PE in row 1 column 0). Optionally, a data transmission mode of each PE may be: transmitting data to a next PE in each clock cycle; or in a clock cycle, the $1^{st}$ PE transmits $a_0$ and $i_0$ to a next PE in the row direction (that is, a PE in row 0 column 1) until the data is transmitted to the last PE in the row (that is, row 0), and transmits $b_0$ and $j_0$ to the last PE in the column (column 0). In this example, a quantity of levels of PEs for transmission in each clock unit may be designed based on an actual requirement, and is not specifically limited.

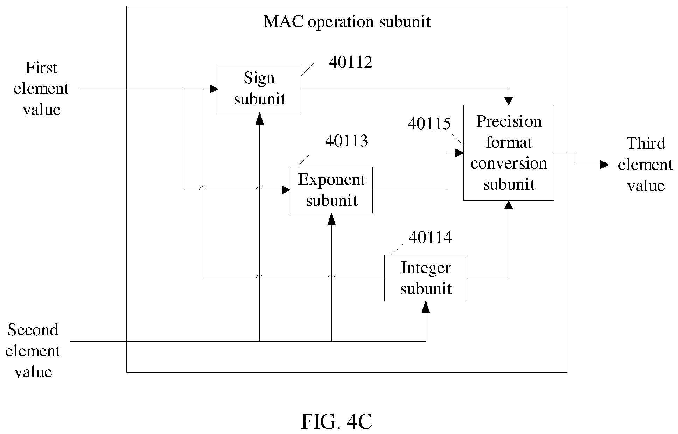

Optionally, the following describes a structure of the MAC operation subunit in the PE. Refer to FIG. 4C. FIG. 4C is a schematic diagram of the structure of the MAC operation subunit. The MAC operation subunit in each PE includes a sign subunit 40112, an exponent subunit 40113, an integer subunit 40114, and a precision format conversion subunit 40115. The sign subunit 40112, the exponent subunit 40113, and the integer subunit 40114 all are connected to the precision format conversion subunit 40115. The sign subunit 40112 is configured to process a positive sign and a negative sign of an input value. The exponent subunit 40113 is configured to process decimal point displacement calculation when two floating-points are multiplied. The integer subunit 40114 is configured to perform multiplication calculation on two integers. The precision format conversion subunit 40115 is configured to output a value format (for example, a floating-point format such as FP16, FP32, and FP64, or an integer format such as int32, int16, and int8) that complies with a specification. In this example, the MAC operation subunit is a general-purpose unit that supports the floating-point format and the integer format. This enhances applicability of the matrix calculation apparatus.

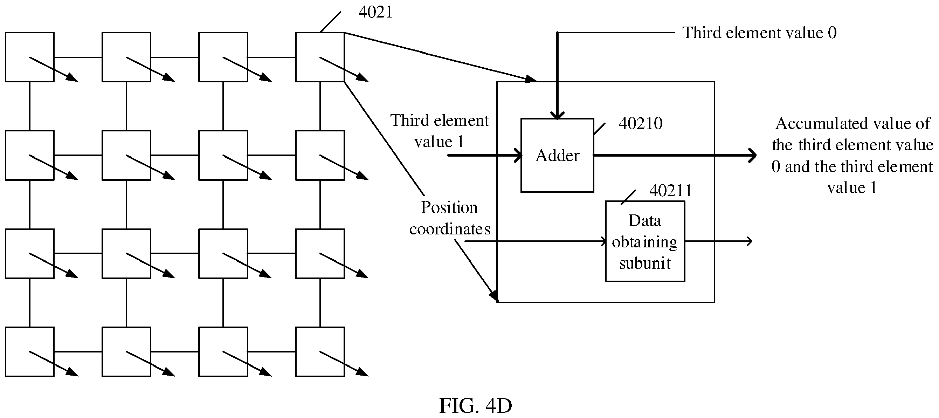

Optionally, the following describes a structure of the accumulator 402 in the matrix calculation apparatus. Refer to FIG. 4D. FIG. 4D is a schematic diagram of the structure of the accumulator 402. The accumulator 402 includes a plurality of accumulator (Accumulator, ACC) processing elements 4021. In other words, the accumulator 402 includes an ACC processing element array including the plurality of ACC processing elements 4021. Each ACC processing element 4021 receives a group of data output by the vector outer product processing engine 401, where the group of data includes one third element value and position coordinates corresponding to the third element value. Each ACC processing element 4021 includes an adder 40210 and a data obtaining subunit 40211. The data obtaining subunit 40211 is configured to: receive the position coordinates, and output the position coordinates to the first cache 403, so that the adder 40210 obtains, from the first cache 403, a cached value corresponding to the position coordinates. The adder 40210 is configured to accumulate cached values output by the first cache 403 and the third element values. For example, one ACC processing element 4021 receives one "third element value 0" (for example, $c_{00}$) in an intermediate result matrix $C_0$ output by the vector outer product processing engine 401 and position coordinates (for example, $(i_0, j_0)$) corresponding to $c_{00}$. The ACC processing element 4021 first writes the "third element value 0" into the first cache 403 based on the position coordinates (for example, $(1, 1)$). Then, when the ACC processing element 4021 receives a "third element value 1" (for example, $c_{10}$) in an intermediate result matrix $C_1$ that is output by the vector outer product processing engine 401 and position coordinates (for example, $(1, 1)$) corresponding to $c_{10}$, the ACC processing element 4021 receives a cached value (for example, $c_{00}$) corresponding to the position coordinates that is output by the first cache 403. Then, the adder 40210 is configured to add $c_{00}$ and $c_{10}$, and output an accumulated value of $c_{00}$ and $c_{10}$ to the first cache 403.

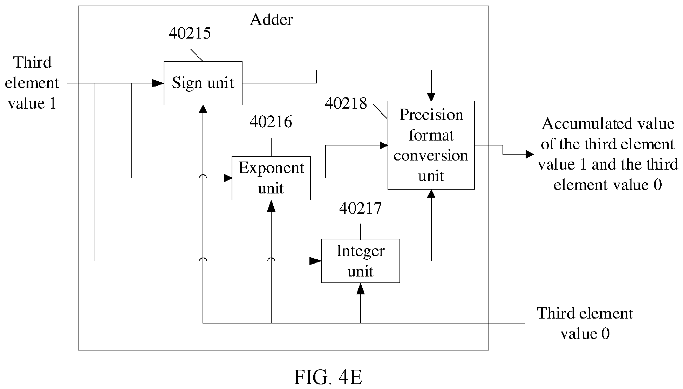

Optionally, refer to FIG. 4E. The adder 40210 further specifically includes a sign unit 40215, an exponent unit 40216, an integer unit 40217, and a precision format conversion unit 40218. The sign unit 40215, the exponent unit 40216, and the integer unit 40217 all are connected to the precision format conversion unit 40218. The sign unit 40215 is configured to process a positive or negative sign of an input value. The exponent unit 40216 is configured to process decimal point displacement calculation when two floating-points are multiplied. The integer unit 40217 is configured to perform a multiplication operation on two integers. The precision format conversion unit 40218 is configured to output a value format (for example, a floating-point format such as FP16, FP32, and FP64, or an integer format such as int32, int16, and int8) that complies with a specification. In this example, the adder 40210 is a general-purpose unit that supports the floating-point format and the integer format. This enhances applicability of the matrix calculation apparatus.

The following describes a specific function of the format conversion unit 405. The format conversion unit 405 is configured to: convert the first matrix in the compressed format into the N first column vectors, and convert the second matrix in the compressed format into the N first row vectors, where the first column vector includes the first element values and the row coordinates of the first element values, and the first row vector includes the second element values and the column coordinates of the second element values. A dimension of the first matrix is $M \times N$, and a dimension of the second matrix is $N \times K$, where M, N, and K are integers greater than or equal to 1.

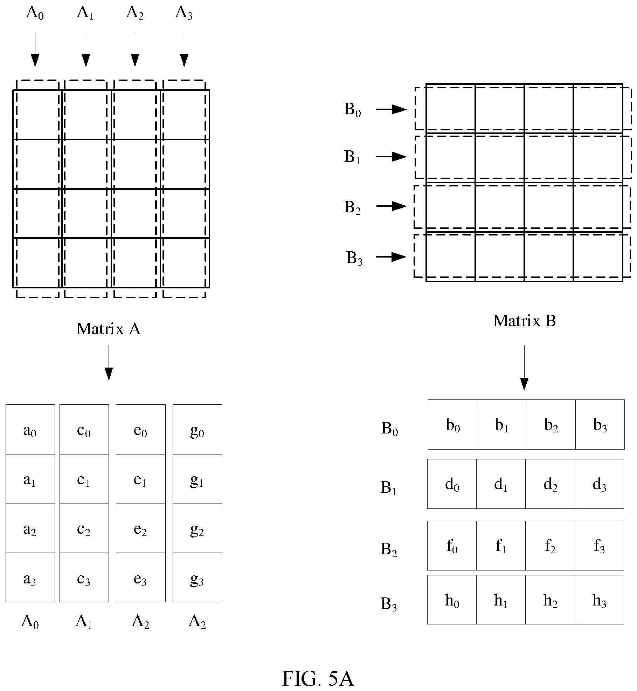

Refer to FIG. 5A. For ease of description, in this example, that values of M, N, and K all are 4 is used as an example for description, that is, the dimensions of the first matrix and the second matrix are both 4x4. An example in which the first matrix is a matrix A and the second matrix is a matrix B is used for description. An example in which the compressed format of the first matrix and the second matrix is COO is used for description.

The format conversion unit 405 is configured to split the matrix A by column into four first column vectors, where the four first column vectors are $A_0$, $A_1$, $A_2$, and $A_3$. The format conversion unit 405 splits the matrix B by row into four first row vectors, where the four first row vectors are $B_0$, $B_1$, $B_2$, and $B_3$. An example in which the first column vector is $A_0$ is used for description, where $A_0$ is $[a_0, a_1, a_2, a_3]^T$, and $a_0, a_1, a_2, a_3$ in $A_0$ all are element values. Each element value has a corresponding row coordinate. For example, a row coordinate of $a_0$ is $i_0$, a row coordinate of $a_1$ is $i_1$, a row coordinate of $a_2$ is $i_2$, and a row coordinate of $a_3$ is $i_3$. An example in which the first row vector is $B_0$ is used for description. $B_0$ is $[b_0, b_1, b_2, b_3]$, and $b_0, b_1, b_2, b_3$ in $B_0$ all are element values. Each element value in $B_0$ has a corresponding column coordinate. For example, a column coordinate of $b_0$ is $j_0$, a column coordinate of $b_1$ is $j_1$, a column coordinate of $b_2$ is $j_2$, and a column coordinate of $b_3$ is $j_3$. It should be understood that, the matrix A is split based on N columns, and for each element value in a first column vector obtained after splitting, only a row coordinate of the element value is reserved. The matrix B is split based on N rows, and for each element value in a first row vector obtained after splitting, only a column coordinate of the element value is reserved. Similarly, $A_1$ is $[c_0, c_1, c_2, c_3]^T$, and $c_0, c_1, c_2, c_3$ in $A_1$ all are element values. Each element value has a corresponding row coordinate. For example, a row coordinate of $c_0$ is $k_0$, a row coordinate of $c_1$, is $k_1$, a row coordinate of $c_2$ is $k_2$, and a row coordinate of $c_3$ is $k_3$. $B_1$ is $[d_0, d_1, d_2, d_3]$, and $d_0, d_1, d_2, d_3$ in $B_1$ are element values. Each element value in $B_1$ has a corresponding column coordinate. For example, a column coordinate of $d_0$ is $l_0$, a column coordinate of $d_1$, is $l_1$, a column coordinate of $d_2$ is $l_2$, and a column coordinate of $d_3$ is $l_3$.

For example, the first matrix in the compressed format is represented in the COO format as: (0, 0, 1), (1, 0, 2), (1, 1, 3), (1, 2, 4), (2, 0, 5), (2, 2, 6), (2, 3, 7), (3, 1, 8), (3, 3, 9), and (3, 0, 6). The format conversion unit 405 splits the first matrix in the compressed format by column, where element values in (0, 0, 1), (1, 0, 2), (2, 0, 5) and (3, 0, 6) are element values in a same column, that is, all are element values in column 0. It should be understood that, when the format conversion unit 405 splits the matrix A by column, element values "1", "2", "5", and "6" are used as element values in the $A_0$ vector. The element values "1", "2", "5", and "6" all are element values in a same column. In this case, only row coordinates of the element values need to be reserved. In this example, the vector $A_0$ includes four element values, and the four element values are "1", "2", "5", and "6". In addition, a row coordinate of the element value "1" is "0". Similarly, a row coordinate of the element value "2" is "1", a row coordinate of the element value "5" is "2", and a row coordinate of the element value "6" is "3".

For another example, the second matrix in the compressed format is represented in the COO format as: (0, 0, 1), (1, 0, 2), (2, 1, 3), (1, 2, 4), (2, 0, 5), (2, 2, 6), (2, 3, 7), (3, 1, 8), (3, 3, 9), and (3, 0, 6). The format conversion unit 405 splits the second matrix based on row coordinates, that is, uses element values in a same row as element values in a same vector. For example, row coordinates in the four triplets (2, 1, 3), (2, 0, 5), (2, 2, 6) and (2, 3, 7) are the same. In this case, element values in the four triplets are split into one row vector (for example, the row vector $B_0$), and the element values "3", "5", "6", and "7" are used as element values in the first row vector $B_0$, and each element value in the first row vector $B_0$ has a corresponding column coordinate. For example, a column coordinate of the element value "3" is "1", a column coordinate of the element value "5" is "0", a column coordinate of the element value "6" is "2", and a column coordinate of the element value "7" is "3". It should be noted that a specific value in the COO format is merely an example provided for ease of description, and does not constitute a limitation on this application.

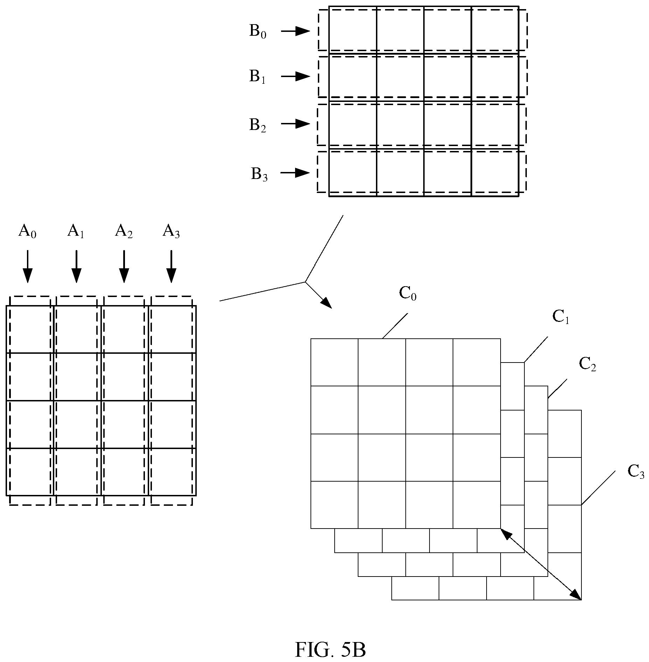

The vector outer product processing engine 401 is configured to calculate vector outer products of the N first column vectors and the N first row vectors, to obtain N intermediate result matrices. The intermediate result matrix includes third element values and position coordinates of the third element values, and the position coordinates include the row coordinates of the first element values and the column coordinates of the second element values. For example, refer to FIG. 5B. The vector outer product processing engine 401 calculates a vector outer product of a first column vector and a first row vector. For example, the vector outer product processing engine 401 calculates a vector outer product of $A_0$ and $B_0$, to obtain an intermediate result matrix $C_0$. Similarly, the vector outer product processing engine 401 calculates a vector outer product of $A_1$ and $B_1$, to obtain an intermediate result matrix $C_1$. The vector outer product processing engine 401 calculates a vector outer product of $A_2$ and $B_2$, to obtain an intermediate result matrix $C_2$. The vector outer product processing engine 401 calculates a vector outer product of $A_3$ and $B_3$, to obtain an intermediate result matrix $C_3$. An example in which the intermediate result matrix calculated by the vector outer product processing engine 401 is $C_0$ is used, as shown in Formula (11):

$$C_0 = \begin{bmatrix} a_0 \\ a_1 \\ a_2 \\ a_3 \end{bmatrix} \otimes \begin{bmatrix} b_0 & b_1 & b_2 & b_3 \end{bmatrix} = \begin{bmatrix} a_0b_0 & a_0b_1 & a_0b_2 & a_0b_3 \\ a_1b_0 & a_1b_1 & a_1b_2 & a_1b_3 \\ a_2b_0 & a_2b_1 & a_2b_2 & a_2b_3 \\ a_3b_0 & a_3b_1 & a_3b_2 & a_3b_3 \end{bmatrix} \quad \text{Formula (11)}$$

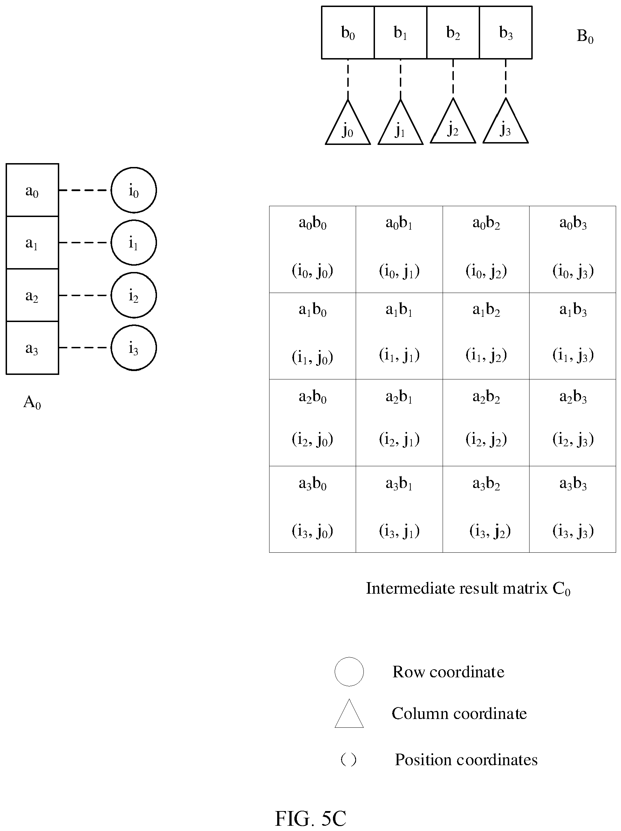

The intermediate result matrix $C_0$ includes third element values, and each third element value has corresponding position coordinates. The position coordinates are a combined value of a row coordinate of a first element value and a column coordinate of a second element value. For example, refer to FIG. 5C. If a row coordinate of $a_0$ is $i_0$, and a column coordinate of $b_0$ is $j_0$, position coordinates of a third element value $a_0b_0$ are $(i_0, j_0)$. Similarly, if a row coordinate of $a_0$ is $i_0$, and a column coordinate of $b_1$ is $j_1$, position coordinates of a third element value $a_0b_1$ are $(i_0, j_1)$; and if a row coordinate of $a_1$ is $i_1$, and a column coordinate of $b_0$ is $j_0$, position coordinates of a third element value $a_1b_0$ are $(i_1, j_0)$. The position coordinates of the third element values in the intermediate result matrix $C_0$ are not described by using examples one by one.

An example is as follows: $a_0$ is 1, $a_1$ is 2, $a_2$ is 5, and $a_3$ is 6. In addition, the row coordinate of $a_0$ is "0". Similarly, the row coordinate of $a_1$ is "1", the row coordinate of $a_2$ is "2", and the row coordinate of $a_3$ is "3". $b_0$ is 3, $b_1$ is 5, $b_2$ is 6, and $b_3$ is 7. The column coordinate of $b_0$ is "1", the column coordinate of $b_1$ is "0", the column coordinate of $b_2$ is "2", and the column coordinate of $b_3$ is "3". The third element value $a_0b_0$ = 1×3 = 3, and the position coordinates of $a_0b_0$ include the row coordinate of $a_0$ and the column coordinate of $b_0$, that is, the position coordinates of $a_0b_0$ are (0, 3). The third element value $a_0b_1$ = 1×5 = 5, and the position coordinates of $a_0b_1$ include the row coordinate of $a_0$ and the column coordinate of $b_1$, that is, the position coordinates of $a_0b_1$ are (0, 0). The third element value $a_1b_0$ = 2×3 = 6, and the position coordinates of $a_1b_0$ include the row coordinate of $a_1$ and the column coordinate of $b_0$, that is, the position coordinates of $a_0b_1$ are (1, 3).

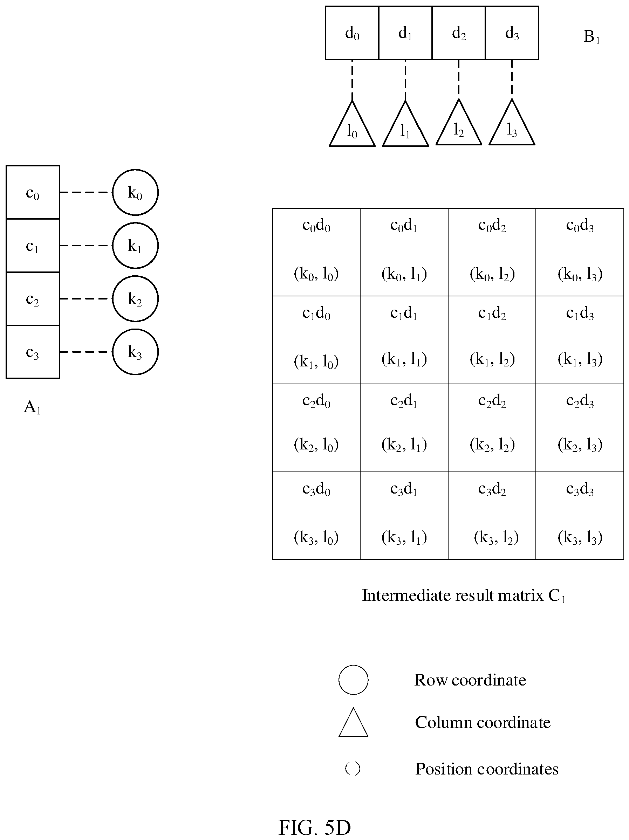

Refer to FIG. 5D. The vector outer product processing engine 401 obtains the intermediate result matrix according to the vector outer product calculation formula in Formula (7). An example in which the intermediate result matrix calculated by the vector outer product processing engine 401 is $C_1$ is used, as shown in Formula (12):

$$C_1 = \begin{bmatrix} c_0 \\ c_1 \\ c_2 \\ c_3 \end{bmatrix} \otimes \begin{bmatrix} d_0 & d_1 & d_2 & d_3 \end{bmatrix} = \begin{bmatrix} c_0d_0 & c_0d_1 & c_0d_2 & c_0d_3 \\ c_1d_0 & c_1d_1 & c_1d_2 & c_1d_3 \\ c_2d_0 & c_2d_1 & c_2d_2 & c_2d_3 \\ c_3d_0 & c_3d_1 & c_3d_2 & c_3d_3 \end{bmatrix} \quad \text{Formula (12)}$$

Similarly, the intermediate result matrix $C_1$ includes third element values, and each third element value in $C_1$ has corresponding position coordinates. For example, refer to FIG. 5D. If a row coordinate of $c_0$ is $k_0$, and a column coordinate of $d_0$ is $l_0$, position coordinates of a third element value $c_0d_0$ are $(k_0, l_0)$. Similarly, if a row coordinate of $c_0$ is $k_0$, and a column coordinate of $d_1$, is $l_1$, position coordinates of a third element value $c_0d_1$ are $(k_0, l_1)$; and if a row coordinate of $c_1$ is $k_1$, and a column coordinate of $d_0$ is $l_0$, position coordinates of a third element value $c_1d_0$ are $(k_1, l_0)$. The position coordinates of the third element values in the intermediate result matrix $C_1$ are not described by using examples one by one.

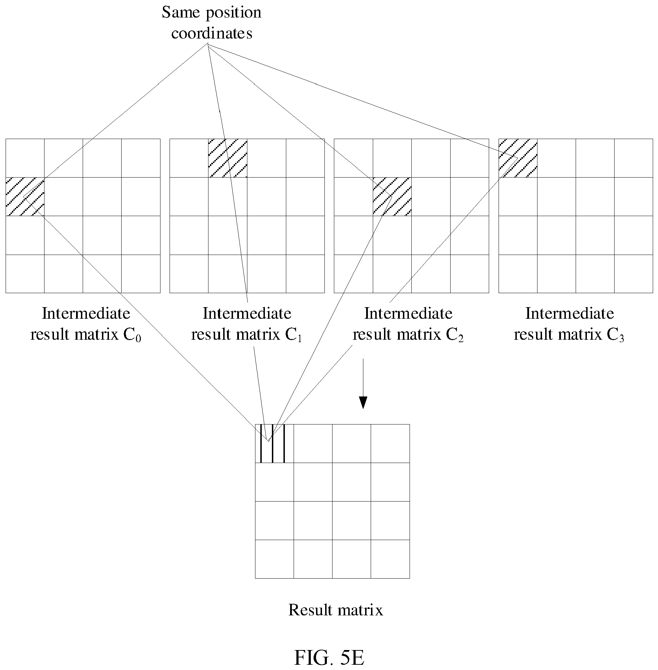

The accumulator 402 is configured to accumulate, based on indexes of the position coordinates of the third element values, third element values with same position coordinates in the N intermediate result matrices, to obtain a result matrix. Still refer to FIG. 5B. In this example, four intermediate result matrices are used as an example for description. Third element values in each intermediate result matrix in the intermediate result matrices $C_0$, $C_1$, $C_2$, and $C_3$ each have position coordinates. The accumulator 402 accumulates the third element values with the same position coordinates, to obtain the result matrix. For example, refer to FIG. 5E. The accumulator 402 adds four third element values whose position coordinates are (0, 0) in $C_0$, $C_1$, $C_2$, and $C_3$, to obtain a fourth element value in the result matrix. Similarly, the accumulator 402 adds four third element values whose position coordinates are (1, 1) in $C_0$, $C_1$, $C_2$, and $C_3$, to obtain a fourth element value in the result matrix. In this example, specific values of position coordinates in a matrix are merely examples for ease of description, and are not for limitation.

Optionally, an implementation in which the accumulator 402 accumulates, based on the indexes of the position coordinates of the third element values, the third element values with the same position coordinates in the N intermediate result matrices includes at least the following two implementations.

In a first possible implementation, when performing vector outer product calculation on the first row vectors and the first column vectors, the vector outer product processing engine 401 generates the intermediate result matrices in a specific sequence. For example, the first row vector and the first column vector that are shown in FIG. 5B are used as an example to calculate a vector outer product. The vector outer product processing engine 401 calculates a vector outer product of $A_0$ and $B_0$, to obtain the intermediate result matrix $C_0$. Then, the vector outer product processing engine 401 calculates a vector outer product of $A_1$ and $B_1$, to obtain the intermediate result matrix $C_1$. Next, the vector outer product processing engine 401 calculates a vector outer product of $A_2$ and $B_2$, to obtain the intermediate result matrix $C_2$. Finally, the vector outer product processing engine 401 calculates a vector outer product of $A_3$ and $B_3$, to obtain the intermediate result matrix $C_3$. For example, a sequence of the four intermediate result matrices is $C_0$, $C_1$, $C_2$, and $C_3$. The accumulator 402 receives the four intermediate result matrices from the vector outer product processing engine 401 according to a sequence of generating the four intermediate result matrices.

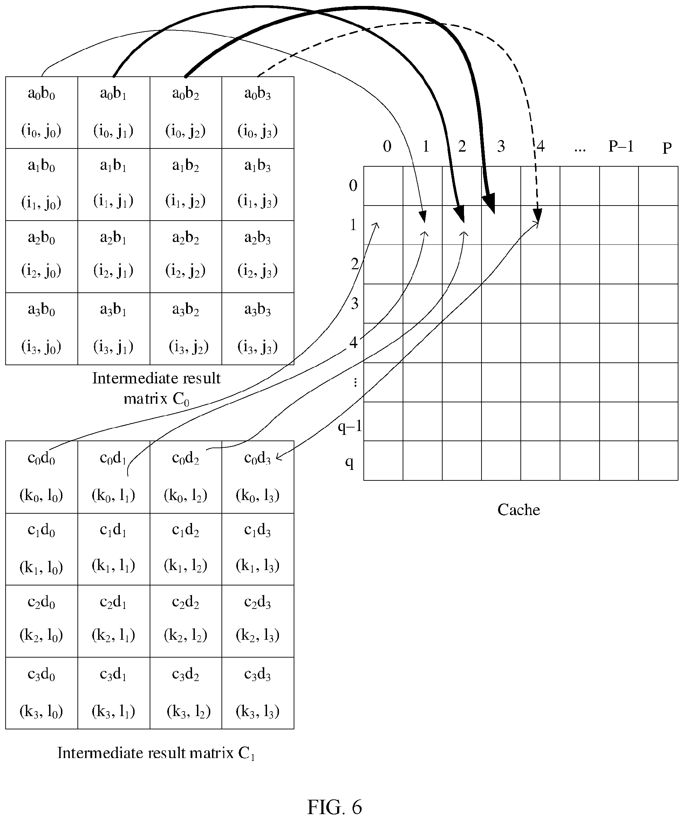

Refer to FIG. 6. The four intermediate result matrices include at least a first intermediate result matrix (for example, $C_0$) and a second intermediate result matrix (for example, $C_1$). To distinguish between position coordinates in the first intermediate result matrix and position coordinates in the second intermediate result matrix, position coordinates of third element values in the first intermediate result matrix are referred to as "first position coordinates", and position coordinates of third element values in the second result matrix are referred to as "second position coordinates".

For example, in the first cache 403, the first cache 403 is divided into a plurality of storage positions by using a row coordinate identifier and a columncoordinate identifier. For example, in the first cache 403, storage space of the first cache 403 is divided into $q \times p$ storage positions based on p rows and q columns. After receiving $C_0$, the accumulator 402 writes the third element values in $C_0$ into a corresponding position in the first cache 403 based on the first position coordinates. For example, if position coordinates of a third element value $a_0 b_0$ in $C_0$ are $(i_0, j_0)$, for example, $(i_0, j_0)$ are (1, 1), the accumulator 402 writes, based on the position coordinates $(i_0, j_0)$, $a_0 b_0$ into a position of row 1 column 1 in the first cache 403. Similarly, if position coordinates of a third element value $a_0 b_1$ in $C_0$ are $(i_0, j_1)$, for example, $(i_0, j_1)$ are (1, 2), the accumulator 402 writes, based on the position coordinates $(i_0, j_1)$, $a_0 b_1$ into a position of row 1 column 2 in the first cache 403. If position coordinates of a third element value $a_0 b_2$ in $C_0$ are $(i_0, j_2)$, for example, $(i_0, j_2)$ are (1, 3), the accumulator 402 writes, based on the position coordinates $(i_0, j_2)$, $a_0 b_2$ into a position of row 1 column 3 in the first cache 403. If position coordinates of a third element value $a_0 b_3$ in $C_0$ are $(i_0, j_3)$, for example, $(i_0, j_3)$ are (1, 4), the accumulator 402 writes, based on the position coordinates $(i_0, j_3)$, $a_0 b_3$ into a position of row 1 column 4 in the first cache 403. A process in which the accumulator 402 writes other third element values in $C_0$ into the first cache 403 is not described in detail. A final result is that the accumulator 402 writes all third element values in $C_0$ into the first cache 403 based on the first position coordinates corresponding to each third element value.

Then, when the accumulator 402 receives $C_1$, the accumulator 402 searches, based on the second position coordinates of a third element value in $C_1$, for a cached value at a position corresponding to the second position coordinates in the first cache 403. If no cached value exists at the position corresponding to the second position coordinates, the accumulator 402 writes the third element value into the position corresponding to the second position coordinates in the first cache 403. If there is a cached value at the position corresponding to the second position coordinates, the accumulator 402 reads the cached value from the first cache 403, and accumulates the cached value and the third element value in $C_1$. For example, position coordinates of a third element value $c_0 d_0$ in $C_1$ are $(k_0, l_0)$, for example, $(k_0, l_0)$ is (1, 0). The accumulator 402 queries the first cache 403 based on the position coordinates $(k_0, l_0)$. If there is no cached value at the position of row 1 column 0 in the first cache 403, the accumulator 402 writes $c_0 d_0$ into the position of row 1 column 0 in the first cache 403. Position coordinates of a third element value $c_0 d_1$ in $C_1$ are $(k_0, l_1)$, for example, $(k_0, l_1)$ is (1, 1). The accumulator 402 obtains through query that there is a cached value $a_0 b_0$ at a position of row 1 column 1 in the first cache 403. The accumulator 402 reads $a_0 b_0$, adds $c_0 d_1$ and $a_0 b_0$, and then writes a result $(c_0 d_1 + a_0 b_0)$ obtained after the addition into a corresponding position (row 1 column 1) of the first cache 403 based on the position coordinates of $c_0 d_1$. Similarly, position coordinates of a third element value $c_0 d_2$ in $C_1$ are $(k_0, l_2)$, for example, $(k_0, l_2)$ is (1, 2). The accumulator 402 obtains through query that there is a cached value $a_0 b_1$ at a position of row 1 column 2 in the first cache 403. The accumulator 402 reads the cached value $a_0 b_1$ from the first cache 403, adds $c_0 d_2$ and $a_0 b_1$, and then writes an accumulated value $(c_0 d_2 + a_0 b_1)$ obtained after the addition into a corresponding position (row 1 column 2) of the first cache 403 based on the position coordinates $c_0 d_2$. In this example, the third element values in $C_1$ are not described by using examples one by one. A final result is that the accumulator 402 adds third element values with same position coordinates in $C_1$ and $C_0$, and writes a result obtained after the addition into a corresponding position in the first cache 403 based on the position coordinates. Similarly, when the accumulator 402 receives the intermediate result matrix $C_2$ transmitted by the vector outer product processing engine 401, the accumulator 402 reads a cached value (an accumulated value of third element values with same position coordinates in $C_0$ and $C_1$) from a corresponding position in the first cache 403 based on position coordinates of each third element value in $C_2$. The accumulator 402 accumulates third element values with same position coordinates in $C_0$, $C_1$, and $C_2$, and then writes an accumulated result into a position corresponding to the position coordinates in the first cache 403. It should be understood that processing processes performed by the accumulator 402 for $C_2$ and $C_3$ are similar to a processing process for $C_1$. Details are not described herein again. A final processing result of the accumulator 402 is to accumulate third element values with same position coordinates in $C_0$, $C_1$, $C_2$, and $C_3$, to obtain a fifth element value. The result matrix includes a plurality of fifth element values. Finally, the first cache 403 outputs the result matrix.

It should be noted that the fifth element value is an accumulated value of a third element value in at least one of the intermediate result matrices $C_0$, $C_1$, $C_2$, and $C_3$. For example, still refer to FIG. 6. The position coordinates of $a_0 b_0$ in $C_0$ are (1, 0), which are included in none of position coordinates of third element values in the other three intermediate result matrices ($C_1$, $C_2$, and $C_3$). In this case, a value written into the position of row 1 column 0 in the first cache 403 is $a_0 b_0$, and $a_0 b_0$ is not accumulated with a third element value in another intermediate result matrix. Similarly, position coordinates of $a_0 b_1$ in $C_0$ and $c_0 d_1$ in $C_1$ are both (1, 1), which are included in none of position coordinates of third element values in the other two intermediate result matrices ($C_2$ and $C_3$). In this case, a value written into a position of row 1 column 0 in the first cache 403 is an accumulated value of $a_0b_1$ and $c_0d_1$. In conclusion, it should be understood that one fifth element value may be one third element value, an accumulated value of two third element values, an accumulated value of three third element values, an accumulated value of four third element values, or the like. In an actual operation, a quantity of third element values accumulated to obtain a fifth element value in the result matrix is determined by a quantity of third element values corresponding to same position coordinates. This is not specifically limited.

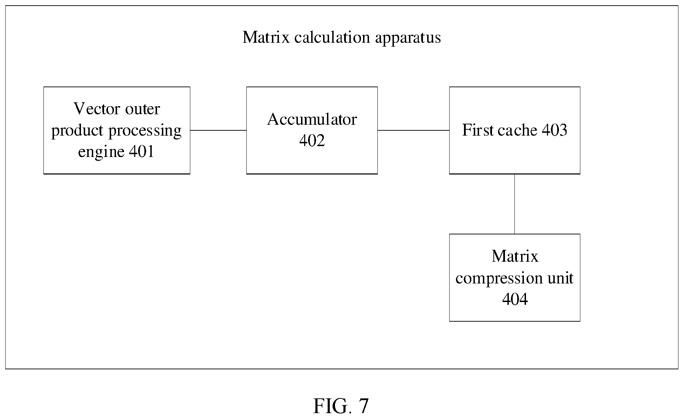

Further, if the fifth element value is an accumulated value of third element values, the fifth element value may be a zero-element value. In this example, the result matrix is a matrix in an uncompressed format. Optionally, to save transmission resources or facilitate a next calculation operation, the matrix calculation apparatus may compress the result matrix, to output a matrix in a compressed format. Refer to FIG. 7. FIG. 7 is another schematic diagram of the structure of the matrix calculation apparatus. The matrix calculation apparatus further includes a matrix compression unit 404. The matrix compression unit 404 is connected to the first cache 403, the first cache 403 outputs the result matrix, and the matrix compression unit 404 receives the result matrix, and converts the result matrix into the matrix in the compressed format based on the row coordinate identifier and the column coordinate identifier in the first cache 403. The result matrix may be in a COO format, a CSR format, a CSC format, or the like. This is not specifically limited.

It should be understood that, in a process of performing accumulation calculation by the accumulator 402, the first cache 403 is configured to store the third element values and the result obtained after the third element values are accumulated. The storage space of the first cache 403 needs to be greater than or equal to a value. For example, if a dimension of each intermediate result matrix is $M \times P$, in other words, each intermediate result matrix includes $M \times P$ third element values, a quantity of cache positions included in the first cache 403 is greater than or equal to $M \times P$. In this case, the storage space of the first cache 403 needs to be capable of storing at least $M \times P$ values.

In a first possible implementation, the matrix calculation apparatus may output a matrix in an uncompressed format or a matrix in a compressed format based on different application scenarios, thereby expanding an applicable scenario of the matrix calculation apparatus.

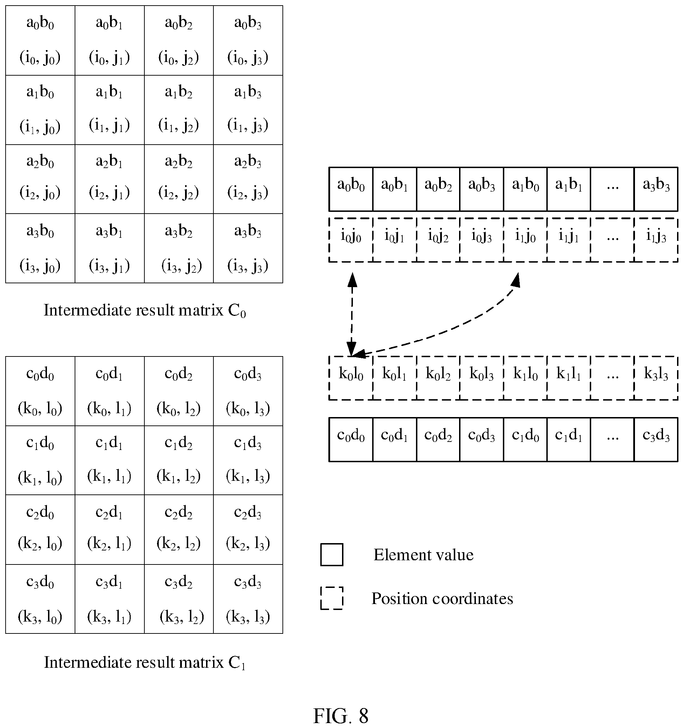

In a second possible implementation, refer to FIG. 8. The accumulator 402 sorts the third element values in the N intermediate result matrices based on the position coordinates of the third element values, then compares position coordinates in N intermediate result matrices obtained through sorting, adds up third element values with same position coordinates, and deletes position coordinates of zero-element values, to obtain the result matrix in the compressed format. For example, when the accumulator 402 receives $C_0$, the accumulator 402 first sorts the third element values in $C_0$ based on the position coordinates of the third element values, and then writes the sorted third element values into the first cache 403. The accumulator 402 may sort the third element values based on row coordinates of the third element values. Optionally, the accumulator 402 may sort the third element values based on column coordinates of the third element values. In this example, an example in which the accumulator 402 sorts the third element values based on the row coordinates is used for description. The accumulator 402 receives $C_1$, and sorts third element values in $C_1$ based on row coordinates of the third element values. The accumulator 402 compares the position coordinates of the third element values in $C_1$ and the position coordinates of the third element values in $C_0$ according to a sequence of the position coordinates of the third element values in $C_1$. For example, the accumulator 402 first compares the row coordinates, for example, compares $k_0$ and $i_0$, and if $k_0$ is consistent with $i_0$, continues to compare the column coordinates. If $k_0$ is inconsistent with $i_0$, the accumulator 402 continues to compare $k_0$ and $i_1$. After comparing the row coordinates, the accumulator 402 compares the column coordinates $l_0$ and $j_0$, $l_0$ and $j_1$, and the like in a sequence of the position coordinates. When position coordinates $(k_0, l_0)$ are consistent with position coordinates $(i_0, j_1)$, the accumulator 402 adds a third element value $c_0d_0$ corresponding to the position coordinates $(k_0, l_0)$ and a third element value $a_0b_0$ corresponding to the position coordinates $(i_0, j_1)$, and then writes an addition result into the first cache 403.

Similarly, when the accumulator 402 receives $C_2$, the accumulator 402 sorts third element values in $C_2$ based on position coordinates. The accumulator 402 reads position coordinates in the first cache 403, compares the position coordinates of the third element values in $C_2$ and the position coordinates in the first cache 403, adds third element values with same position coordinates to cached values, to obtain accumulated values, and then stores the accumulated values in the first cache 403. Calculation performed by the accumulator 402 on the third element values in $C_3$ is similar to calculation performed on the third element values in $C_2$. Details are not described by using examples herein. A final result is that the accumulator 402 accumulates third element values with same position coordinates in the intermediate result matrices $C_3$, $C_2$, $C_1$, and $C_0$, to obtain fifth element values, and the accumulator 402 deletes a zero-element value and position coordinates of the zero-element value from the plurality of fifth element values. The first cache 403 outputs the result matrix, where the result matrix includes the fifth element values and position coordinates of the fifth element values. In addition, the fifth element value included in the result matrix is a non-zero-element value. Therefore, the result matrix output by the first cache 403 is a matrix in a compressed format.

In the second implementation, the matrix in the compressed format may be directly obtained, and the matrix in the compressed format output by the matrix calculation apparatus may be used in some application scenarios in which a matrix in a compressed format needs to be subsequently calculated. In addition, because the matrix calculation apparatus outputs the matrix in the compressed format, transmission resources of a subsequent transmission matrix can be reduced. In addition, in the second implementation, because the third element values cached in the first cache 403 are cached according to the sequence of the position coordinates, the implementation in this example can be implemented by using smaller cache space, thereby saving cache space of the first cache 403.

Optionally, in this example, the format conversion unit 405 is further configured to: obtain a fifth matrix and a sixth matrix, and perform format conversion on the fifth matrix and the sixth matrix in an uncompressed format to obtain the first matrix and the second matrix in the compressed format; and output the first matrix and the second matrix to the second cache 406, where at least one of the fifth matrix or the sixth matrix is a matrix in the uncompressed format. The vector outer product processing engine 401 obtains the first matrix and the second matrix in the compressed format from the second cache 406. In this example, the matrix calculation apparatus may receive the matrix in the uncompressed format, and then convert the matrix in the uncompressed format into the matrix in the compressed format, so that the matrix calculation apparatus can support calculation of matrices in a plurality of formats. In this example, the fifth matrix and the sixth matrix may include the following several cases.

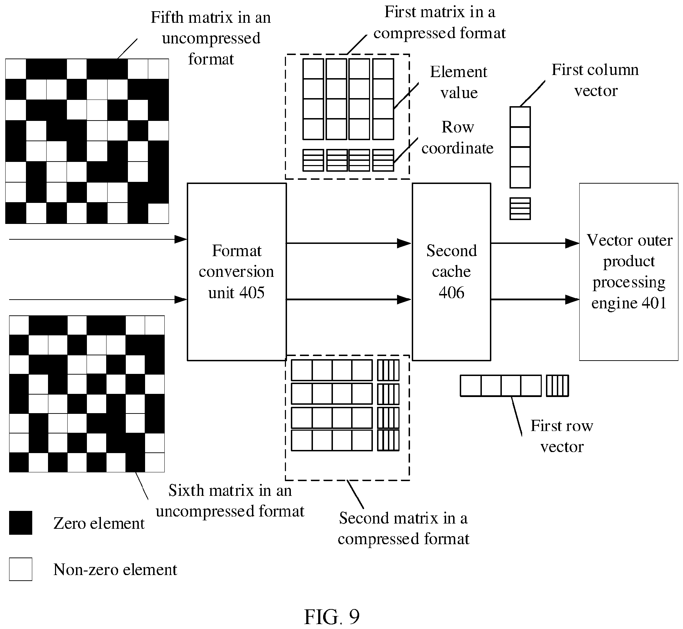

In a first case, refer to FIG. 9. Both the fifth matrix and the sixth matrix are matrices in the uncompressed format. In this case, the format conversion unit 405 converts the fifth matrix into the first matrix in the compressed format, and converts the sixth matrix into the second matrix in the compressed format. Optionally, the format conversion unit 405 may convert the fifth matrix and the sixth matrix into compressed matrices in the COO format. Optionally, because a row coordinate of an element value is reserved in a CSC compressed format, and a column coordinate of an element value is reserved in a CSR compressed format, the format conversion unit may convert the fifth matrix in the uncompressed format into the first matrix in the CSC compressed format, and convert the sixth matrix in the uncompressed format into the CSR compressed format. Further, the format conversion unit 405 converts the first matrix in the compressed format into the N first column vectors, converts the second matrix in the compressed format into the N first row vectors, and writes the N first column vectors and the N first row vectors into the first cache 406. The vector outer product processing engine 401 obtains the first row vectors and the second row vectors from the second cache 406.

In a second case, one of the fifth matrix and the sixth matrix is a matrix in the uncompressed format, and the other matrix is a matrix in the compressed format. An example in which the fifth matrix is a matrix in the uncompressed format, and the sixth matrix is a matrix in the compressed format is used for description. If the sixth matrix is a compressed matrix in a CSC or CSR format, the format conversion unit converts both the fifth matrix and the sixth matrix into compressed matrices in a COO format.

Optionally, the format conversion unit 405 is further configured to convert a matrix in the compressed format into a matrix in a target compressed format. For example, when both the first matrix and the second matrix are in the CSC format or the CSR format, the format conversion unit converts both the first matrix and the second matrix into the COO format.

In this example, the matrix calculation apparatus may convert the matrix in the uncompressed format into the matrix in the compressed format by using the format conversion unit, so that the matrix calculation apparatus can support both calculation of the matrix in the compressed format and calculation of the matrix in the uncompressed format. Optionally, the format conversion unit may convert a matrix in a non-target compressed format into a matrix in the target compressed format (for example, the COO format). In this example, the matrix calculation apparatus may convert a matrix in another compressed format into a matrix in the target compressed format, and perform matrix calculation on the matrix in the target compressed format. The matrix calculation apparatus provided in this application may support calculation of matrices in various formats.

Optionally, to improve applicability of the matrix calculation unit, high-precision matrix calculation may be implemented based on a low-precision matrix calculation apparatus. Precision of element values included in the first column vector and the first row vector is first precision. The format conversion unit 405 splits the first column vector into X second column vectors, and splits the first row vector into X second row vectors, where the second column vector and the second row vector include element values of second precision, and the first precision is higher than the second precision. Then, the vector outer product processing engine 401 calculates vector outer products of the X second column vectors and the X second row vectors to obtain $X^2$ fourth matrices, where the fourth matrix includes fourth element values and position coordinates of the fourth element values. Finally, the accumulator 402 accumulates, based on indexes of the position coordinates of the fourth element values, fourth element values with same position coordinates in the $X^2$ fourth matrices, to obtain the intermediate result matrix, where precision of the third element values in the intermediate result matrix is the first precision.

The following uses an example to describe how to split a vector of the first precision into a vector of the second precision in this example. After converting the first matrix in the compressed format into the N first column vectors and converting the second matrix in the compressed format into the N first row vectors, the format conversion unit 405 may further split a first column vector into X second column vectors and split a first row vector into X second row vectors based on precision of element values. The precision of the element values included in the first column vector and the first row vector is the first precision. Both the second column vector and the second row vector include an element value of the second precision. For ease of description, a vector including the element value of the second precision is referred to as a "vector of the second precision", and a vector including the element value of the first precision is referred to as a "vector of the first precision". X is an integer greater than or equal to 2. The first precision and the second precision may be integer precision, or the first precision and the second precision may be floating point precision. This is not specifically limited. Specifically, the format conversion unit 405 splits each element value in the vector of the first precision into a plurality of values of the second precision, and splits the vector of the first precision into X vectors of the second precision. The following provides descriptions based on cases in which the vector of the first precision and the vector of the second precision are integers, and the vector of the first precision and the vector of the second precision are floating-point vectors.

In a first case, the vector of the first precision and the vector of the second precision are integers. The first precision is higher than the second precision. For example, the first precision is int32, and the second precision may be int2, int4, int8, or int16. Alternatively, the first precision is int16, and the second precision may be int4 or int8. Alternatively, the first precision is int8, and the second precision is int2 or int4. Alternatively, the first precision is int4, and the second precision is int2.

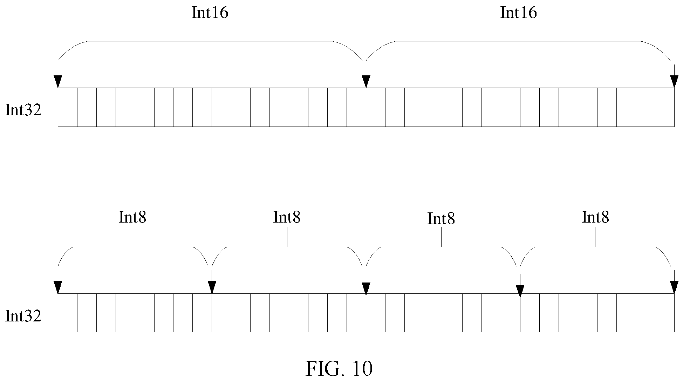

The format conversion unit 405 splits a high-precision integer number into a plurality of low-precision integer numbers, and splits the high-precision integer number from a most significant bit to a least significant bit. For example, refer to FIG. 10. An example in which the first precision is int32 and the second precision is int16 is used for description. int32 includes a 32-bit value range. The 32 bits in int32 are split into two 16 bits from the most significant bit to the least significant bit. That is, int32 is split into two int16. Alternatively, the 32 bits in int32 are split into four 8 bits from the most significant bit to the least significant bit. That is, int32 is split into four int8. Similarly, int16 includes a 16-bit value range. The 16 bits in int16 are split into two 8 bits from the most significant bit to the least significant bit. That is, int16 is split into two int8.

In a second case, the vector of the first precision and the vector of the second precision are floats. For example, a first-precision floating-point is FP32 or FP64, and a second-precision floating-point is FP16. Alternatively, a first-precision floating-point is FP64, and a second-precision floating-point may be FP32, or may be FP16. The following uses a case in which the first-precision floating-point is FP32 and the second-precision floating-point is FP16 as an example for description.

1. One FP32 is split to obtain three FP16.

Currently, composition of FP32 in a standard format is shown in Table 1. FP32 includes a 1-bit (bit) sign, an 8-bit exponent, and a 23-bit mantissa. In addition, there is an omitted 1-bit integer, and the omitted integer is 1. For FP32 in the standard format, the integer and the mantissa are 24 bits in total. FP16 in a standard format includes a 1-bit sign, a 5-bit exponent, a 10-bit mantissa. In addition, there is an omitted 1-bit integer, and the omitted integer is 1. For FP16 in the standard format, the integer and the mantissa are 11 bits in total. To split FP32 in the standard format to obtain FP16 in the standard format, three FP16 in the standard format are required.

The integer and the mantissa of FP32 in the standard format may be divided into three parts. A first part is the integer and the first 10 bits of the mantissa, a second part is the 11th bit to the 21st bit of the mantissa, and a third part is the 22nd bit and the 23rd bit of the mantissa. The three parts are separately represented by FP16 in the standard format. It should be noted herein that, when the 22nd bit and the 23rd bit of the mantissa in the third part is represented by FP16 in the standard format, nine 0s may be padded after the 23rd bit of the mantissa, that is, the 22nd bit and the 23rd bit of the mantissa and the padded 0s are represented by FP16 in the standard format.

In addition, the exponent range of FP16 is -15 to 15, that is, may indicate that a decimal point is shifted leftward by 15 bits to rightward by 15 bits. When FP16 in the standard format is for representing the first part of FP32, the fixed exponent bias is 0; when FP16 in the standard format is for representing the second part of FP32, the fixed exponent bias is -11; and when FP16 in the standard format is for representing the third part of FP32, the fixed exponent bias is -22. It can be learned that, when the third part is represented, only the corresponding fixed exponent bias has exceeded an exponent range of FP16. Therefore, a corresponding fixed exponent bias may be extracted for the exponent of each FP16 in the standard format.

Therefore, FP32 in the standard format may be represented as:

$$A_1 = 2^{EA_1} \left( a_0 + 2^{-S_1} a_1 + 2^{-2S_1} a_2 \right) ,$$

where $A_1$ is FP32 in the standard format, $EA_1$ is an exponent of $A_1$, $a_0$, $a_1$, and $a_2$ are three FP16 in the standard format obtained through splitting, and $S_1$ is a minimum fixed exponent bias. For FP16 in the standard format, $S_1 = 11$.

In addition, a common exponent bias may be extracted for each exponent in FP16 in the standard format. Similarly, FP32 in the standard format may be represented as:

$$A_1 = 2^{EA_1 - S_1} (a_0' + a_1' + a_2') \,,$$

where $a_0'$, $a_1'$, and $a_2'$ are three FP16 in the standard format obtained through splitting. In the foregoing two representation methods, FP16 obtained through splitting has the following relationship: $a_0 = 2^{-S1}a_0'$, $a_1 = a_1'$, and $a_2 = 2^{S1}a_2'$.

2. One FP32 is split to obtain two FP16.

To reduce an amount of FP16 obtained through splitting, current FP16 in a standard format may be adjusted, and a mantissa of FP16 is adjusted to 13 bits, and a quantity of bits of a sign and a quantity of bits of an exponent remain unchanged. Adjusted FP16 may be referred to as FP16 in a non-standard format. For FP16 in the non-standard format, an integer and the mantissa are 14 bits in total. In this case, if a mantissa of FP32 in a standard format is to be represented by FP16 in the non-standard format, only two FP16 in the non-standard format are required.

An integer and a mantissa of FP32 in the standard format are divided into two parts. A first part is the integer and the first 13 bits of the mantissa, and a second part is the 14th bit to the 23rd bit. The two parts are separately represented by FP16 in the non-standard format.

It should be further noted herein that, when the second part is represented by non-standard FP16, four 0s may be padded after the 23rd bit of the mantissa, that is, the 14th bit to the 23rd bit of the mantissa and the padded 0s are represented by FP16 in the non-standard format. Same as the foregoing first case, herein, a corresponding fixed exponent bias may also be extracted for an exponent of each FP16 in the standard format.

Similarly, FP32 in the standard format may be represented as:

$$A_2 = 2^{EA_2} (a_3 + 2^{-S_2}a_4) \,,$$

where $A_2$ is FP32 in the standard format, $EA_2$ is an exponent of $A_2$, $a_3$ and $a_4$ are two FP16 in the non-standard format obtained through splitting, and $S_2$ is a fixed exponent bias. For FP16 in the non-standard format, $S_2 = 14$.

In addition, a common exponent bias may be extracted for each exponent in FP16 in the standard format. Similarly, FP32 in the standard format may be represented as:

$$A_2 = 2^{EA_2 - S_2} (a_3' + a_4') \,,$$

where $a_3'$ and $a_4'$ are two FP16 in the non-standard format obtained through splitting. In the foregoing two representation methods, FP16 obtained through splitting has the following relationship: $a_3 = 2^{-S2}a_3'$ and $a_4 = a_4'$.

Certainly, for a case in which the first-precision floating-point is FP64 and the second-precision floating-point is FP32, there may be the following cases in which for FP64 is split to obtain a plurality of FP32: One FP64 floating-point is split to obtain three FP32 floating-points; or one FP64 floating-point is split to obtain two FP32 floating-points. Optionally, in a case in which the first-precision floating-point is FP64 and the second-precision floating-point is FP16, there may be the following cases in which FP64 is split to obtain a plurality of FP16: One FP64 floating-point is split to obtain five FP16 floating-points; or one FP64 floating-point is split to obtain four FP16 floating-points. A splitting principle is similar to the foregoing described case in which the first-precision floating-point is FP32 and the second-precision floating-point is FP16. Details are not described herein.

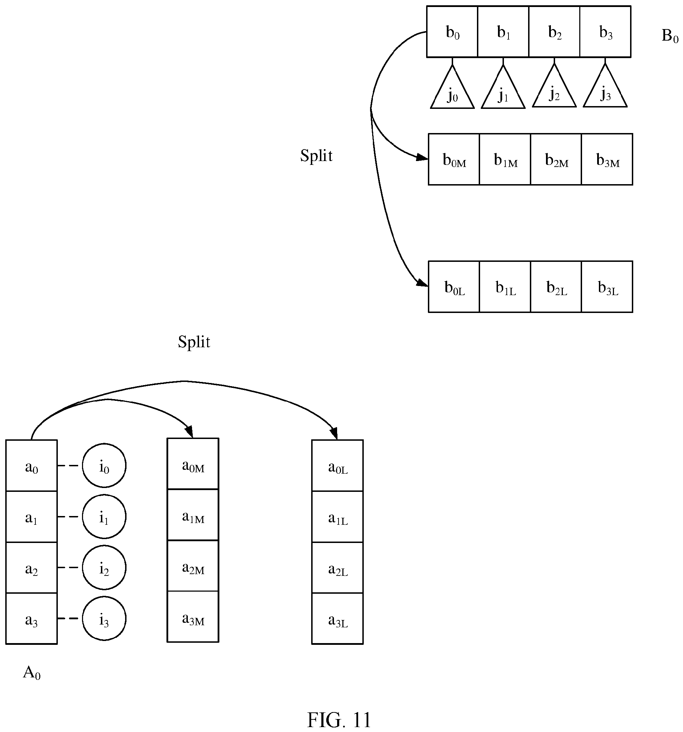

For example, for ease of description, an example in which the first row vector is split into two second row vectors and the first column vector is split into two second column vectors is used for description. For example, the first row vector $A_0$ is a column vector $[a_0, a_1, a_2, a_3]^T$ whose precision is FP32. For example, in the foregoing method for splitting a value of the first precision into two values of the second precision, the format conversion unit 405 splits a floating-point $a_0$ whose precision is FP32 into two floating-points (for example, $a_{0M}$ and $a_{0L}$) whose precision is FP16. Similarly, $a_1$ is split into $a_{1M}$ and $a_{1L}$. $a_2$ is split into $a_{2M}$ and $a_{2L}$. $a_3$ is split into $a_{3M}$ and $a_{3L}$. To be specific, as shown in FIG. 11, the format conversion unit 405 splits a column vector $[a_0\ a_1\ a_2\ a_3]^T$ whose precision is FP32 into two column vectors $[a_{0M}\ a_{1M}\ a_{2M}\ a_{3M}]^T$ (denoted as a "second column vector 1") and $[a_{0L}\ a_{1L}\ a_{2L}\ a_{3L}]^T$ (denoted as a "second column vector 2") whose precision is FP16. Similarly, $B_0$ is a row vector $[b_0\ b_1\ b_2\ b_3]$ whose precision is FP32, and $[b_0\ b_1\ b_2\ b_3]$ is also split into two row vectors $[b_{0M}\ b_{1M}\ b_{2M}\ b_{3M}]$ (denoted as a "second row vector 1") and $[b_{0L}\ b_{1L}\ b_{2L}\ b_{3L}]$ (denoted as a "second row vector 2") corresponding to FP16. It should be noted that row coordinates of all element values in the first column vector and the second column vector are the same. To be specific, row coordinates of $a_{0M}$ and $a_{0L}$ are $i_0$, row coordinates of $a_{1M}$ and $a_{1L}$ are $i_1$, row coordinates of $a_{2M}$ and $a_{2L}$ are $i_2$, and row coordinates of $a_{3M}$ and $a_{3L}$ are $i_3$. Column coordinates of all element values in the first row vector and the second row vector are the same. To be specific, column coordinates of $b_{0M}$ and $b_{0L}$ are $j_0$, column coordinates of $b_{1M}$ and $b_{1L}$ are $j_1$, column coordinates of $b_{2M}$ and $b_{2L}$

are $j_2$, and column coordinates of $b_{3M}$ and $b_{3L}$ are $j_3$.

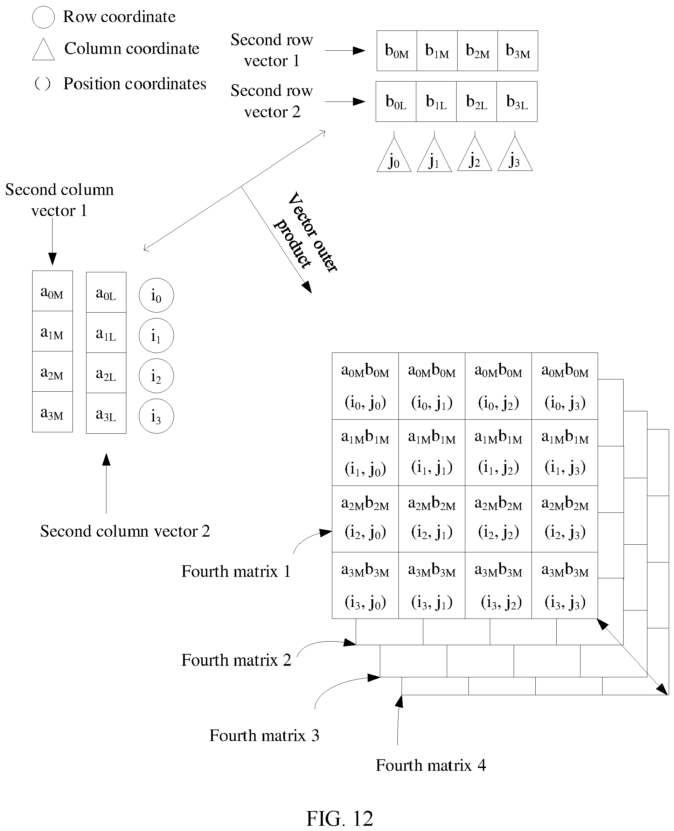

Further, the vector outer product processing engine 401 calculates vector outer products of the X second column vectors and the X second row vectors to obtain $X^2$ fourth matrices, where the fourth matrix includes fourth element values and position coordinates of the fourth element values, the position coordinates of the fourth element values include the row coordinates of the element values in the first column vector and the column coordinates of the element values in the first row vector, and precision of the fourth element values is the first precision (for example, FP32). In this example, refer to FIG. 12. An example in which X is 2 is used for description. The vector outer product processing engine 401 calculates vector outer products of two second column vectors $[a_{0M}\ a_{1M}\ a_{2M}\ a_{3M}]^T$ and $[a_{0L}\ a_{1L}\ a_{2L}\ a_{3L}]^T$ and two second row vectors $[b_{0M}\ b_{1M}\ b_{2M}\ b_{3M}]$ and $[b_{0L}\ b_{1L}\ b_{2L}\ b_{3L}]$. To be specific, the vector outer product processing engine 401 calculates a vector outer product of $[a_{0M}\ a_{1M}\ a_{2M}\ a_{3M}]^T$ and $[b_{0M}\ b_{1M}\ b_{2M}\ b_{3M}]$ to obtain a fourth matrix 1; calculates a vector outer product of $[a_{0M}\ a_{1M}\ a_{2M}\ a_{3M}]^T$ and $[b_{0L}\ b_{1L}\ b_{2L}\ b_{3L}]$ to obtain a fourth matrix 2; calculates a vector outer product of $[a_{0L}\ a_{1L}\ a_{2L}\ a_{3L}]^T$ and $[b_{0M}\ b_{1M}\ b_{2M}\ b_{3M}]$ to obtain a fourth matrix 3; and calculates a vector outer product of $[a_{0L}\ a_{1L}\ a_{2L}\ a_{3L}]^T$ and $[b_{0L}\ b_{1L}\ b_{2L}\ b_{3L}]$ to obtain a fourth matrix 4. The vector outer product processing engine 401 obtains four fourth matrices through vector outer product calculation. The accumulator 402 obtains the four fourth matrices, and accumulates, based on indexes of the position coordinates of the fourth element values, fourth element values with same position coordinates in the four fourth matrices, to obtain an intermediate result matrix, where precision of the third element values in the intermediate result matrix is the first precision. For example, a fourth element value $a_{0M}b_{0L}$ in the fourth matrix 1, a fourth element value $a_{0M}b_{1M}$ in the fourth matrix 2, a fourth element value $a_{1L}b_{0L}$ in the fourth matrix 3, and a fourth element value $a_{1L}b_{1M}$ in the fourth matrix 4 have same position coordinates. The accumulator 402 accumulates the four fourth element values $a_{0M}b_{0L}$, $a_{0M}b_{1M}$, $a_{1L}b_{0L}$, and $a_{1L}b_{1M}$, where an obtained accumulated value is a third element value in the intermediate result matrix $C_0$. In this example, a specific method for accumulating the fourth element values with the same position coordinates in the $X^2$ fourth matrices is similar to the methods for accumulating the values performed by the accumulator 402 in the examples corresponding to FIG. 6 and FIG. 8. For details, refer to the foregoing methods performed by the accumulator 402 in the examples corresponding to FIG. 5E, FIG. 6, and FIG. 8. Details are not described herein again. In this example, when a vector outer product of two vectors is calculated, a first-precision (high-precision) vector may be further split into a plurality of second-precision (low-precision) vectors, and then vector outer product calculation is performed on the low-precision vectors, so that an outer product of the first-precision vector may be obtained by accumulating outer product results of the plurality of second-precision vectors, without losing precision.

In this example, if the precision of the element values in the first row vector and the first column vector is high, the matrix calculation apparatus may split both the first row vector and the first column vector into a plurality of low-precision vectors. The matrix calculation apparatus performs vector outer product calculation on the low-precision second column vectors and the low-precision second row vectors, to obtain a result matrix, so that calculation can be performed on a matrix in a compressed format, and high-precision matrix calculation can be implemented based on a low-precision matrix calculation apparatus, thereby improving applicability of the matrix calculation apparatus. In addition, in a matrix calculation process, an upper-layer software application (such as AI and HPC) based on the matrix calculation apparatus does not sense a specific matrix calculation process, so that software adaptation costs can be greatly reduced.

Based on the matrix calculation apparatus provided in this application, a great benefit can be obtained in a plurality of matrix calculation scenarios. For example, when the matrix calculation apparatus is used in an AI training and inference scenario, calculation of a matrix in a compressed format and matrix in an uncompressed format can be completely supported. In AI calculation, a sparseness characteristic of a weight and feature data is more than 50% on average (that is, more than 50% matrices are in the compressed format). The matrix calculation format in this application may directly calculate the matrix in the compressed format, without splitting the matrix in the compressed format. In this way, calculation efficiency can be improved by more than four times. In addition, for an HPC scenario such as scientific computing, regardless of calculation of a matrix in an uncompressed format that requires high computing power or a matrix calculation scenario in which memory bandwidth is limited, the matrix calculation apparatus in this application can directly access a matrix in a compressed format from a memory, thereby improving a calculation benefit. The matrix calculation apparatus supports full-precision numerical calculation, and can also effectively cover calculation with various different precision requirements. For example, floating-point calculation such as FP32 and FP16 usually required in an AI training scenario, and some scenarios such as an AI training scenario that requires FP64 and HPC scientific computing can be fully supported by the matrix calculation apparatus. In addition, the MAC in the matrix calculation apparatus can also support calculation of integer formats with medium and low precision such as INT1, INT2, INT4, and INT8. For a calculation scenario of AI inference, computing power can be improved and inference computation time can be reduced. In addition, various scenarios in which different precision can be mixed in inference computing, thereby greatly enhancing applicability of the matrix calculation apparatus.

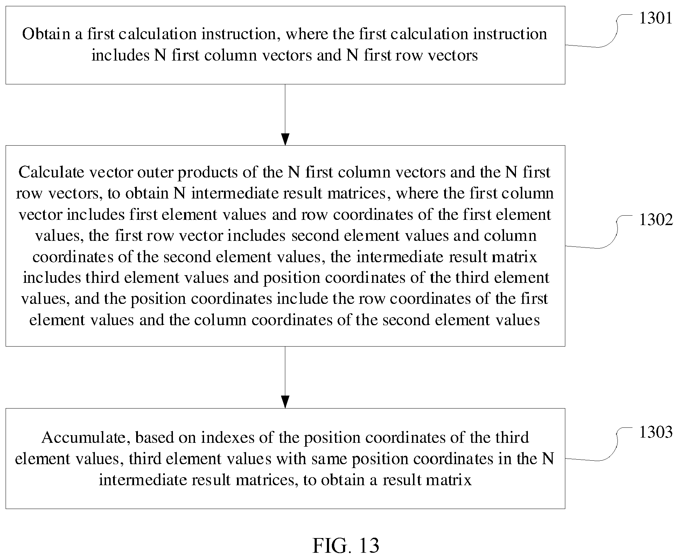

The foregoing describes the embodiment of the matrix calculation apparatus, and the following describes a method performed by the matrix calculation apparatus. Refer to FIG. 13. An embodiment of this application provides a matrix calculation method. The method may be performed by the computing device shown in FIG. 2. Optionally, the method is performed by the matrix calculation apparatus shown in FIG. 3. Optionally, the method may be performed by the matrix calculation apparatus shown in FIG. 4A. Optionally, the method may be performed by the matrix calculation apparatus shown in FIG. 7.

Step 1301: Obtain a first calculation instruction, where the first calculation instruction includes N first column vectors and N first row vectors.

The N first column vectors are obtained by converting a first matrix in a compressed format, the N first row vectors are obtained by converting a second matrix in the compressed format, and N is an integer greater than or equal to 1.

Step 1302: Calculate vector outer products of the N first column vectors and the N first row vectors, to obtain N intermediate result matrices, where the first column vector includes first element values and row coordinates of the first element values, the first row vector includes second element values and column coordinates of the second element values, the intermediate result matrix includes third element values and position coordinates of the third element values, and the position coordinates include the row coordinates of the first element values and the column coordinates of the second element values.

For this step, refer to specific descriptions of functions performed by the vector outer product processing engine 401 in FIG. 5B, FIG. 5C, and FIG. 5D in the foregoing embodiment of the matrix calculation apparatus. Details are not described herein again.

Step 1303: Accumulate, based on indexes of the position coordinates of the third element values, third element values with same position coordinates in the N intermediate result matrices, to obtain a result matrix.

The N intermediate result matrices include at least a first intermediate result matrix and a second intermediate result matrix, position coordinates of third element values in the first intermediate result matrix are first position coordinates, and position coordinates of third element values in the second intermediate result matrix are second position coordinates.

In a first possible implementation, the matrix calculation apparatus writes, in a generation sequence of the N intermediate result matrices, the third element values in the first intermediate result matrix into corresponding positions in a cache based on the first position coordinates; and then reads, based on the second position coordinates of the third element values in the second intermediate result matrix, cached values that are at positions corresponding to the second position coordinates in the cache, and accumulate the third element values in the second intermediate result matrix and the cached values, to obtain a result matrix in an uncompressed format. Optionally, the matrix calculation apparatus compresses the result matrix in the uncompressed format to obtain a result matrix in a compressed format.

In the first possible implementation, refer to specific descriptions of functions performed by the accumulator 402 in the examples corresponding to FIG. 5E and FIG. 6 in the foregoing embodiment of the matrix calculation apparatus. Details are not described herein again.

In a second possible implementation, the matrix calculation apparatus sorts the third element values in the N intermediate result matrices based on the position coordinates of the third element values. The matrix calculation apparatus compares position coordinates in N intermediate result matrices obtained through sorting, adds up third element values with same position coordinates, and deletes position coordinates of a zero-element value, to obtain a result matrix in a compressed format.

In the second possible implementation, refer to specific descriptions of functions performed by the accumulator 402 in the examples corresponding to FIG. 5E and FIG. 8 in the foregoing embodiment of the matrix calculation apparatus. Details are not described herein again.

In this embodiment of this application, the matrix calculation apparatus can directly calculate the matrix in the compressed format, and does not need to perform operations such as decompressing the matrix in the compressed format and performing matrix calculation on a decompressed matrix in a conventional method. The matrix calculation apparatus in this embodiment of this application can improve calculation efficiency of the matrix in the compressed format.

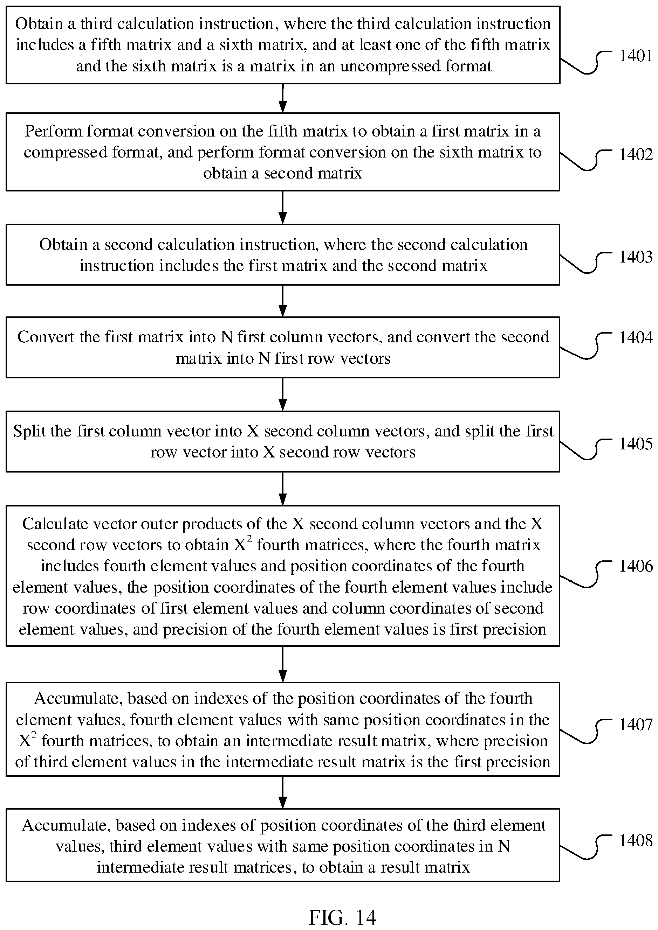

Optionally, refer to FIG. 14. To support matrix calculation in a plurality of formats, the matrix calculation apparatus can convert a matrix in an uncompressed format into a matrix in a compressed format, so that the matrix in the uncompressed format can be calculated, and format conversion performed on the matrix in the uncompressed format is shown in the following step 1401 and step 1402.

Step 1401: Obtain a third calculation instruction, where the third calculation instruction includes a fifth matrix and a sixth matrix, and at least one of the fifth matrix and the sixth matrix is a matrix in an uncompressed format.

Step 1402: Perform format conversion on the fifth matrix to obtain the first matrix in the compressed format, and perform format conversion on the sixth matrix to obtain the second matrix.

For step 1401 and step 1402, refer to specific descriptions of functions performed by the format conversion unit 405 in the example corresponding to FIG. 9 in the foregoing embodiment of the matrix calculation apparatus. Details are not described herein again.

In this embodiment of this application, the matrix calculation apparatus may convert the matrix in the uncompressed format into the matrix in the compressed format by using the format conversion unit, so that the matrix calculation apparatus can support both calculation of the matrix in the compressed format and calculation of the matrix in the uncompressed format. Optionally, the format conversion unit may convert a matrix in a non-target compressed format into a matrix in the target compressed format (for example, the COO format). In this example, the matrix calculation apparatus may convert a matrix in another compressed format into a matrix in the target compressed format, and perform matrix calculation on the matrix in the target compressed format. The matrix calculation apparatus provided in this application may support calculation of matrices in various formats.

Step 1403: Obtain a second calculation instruction, where the second calculation instruction includes the first matrix and the second matrix.

Step 1404: Convert the first matrix into the N first column vectors, and convert the second matrix into the N first row vectors.

For step 1403 and step 1404, refer to descriptions of functions performed by the format conversion unit 405 in the example corresponding to FIG. 5A in the foregoing embodiment of the matrix calculation apparatus. Details are not described herein again.

Optionally, to improve applicability of the matrix calculation unit, high-precision matrix calculation may be implemented based on a low-precision matrix calculation apparatus. A vector of first precision is split into a plurality of vectors of second precision, and then vector outer product calculation is performed on the vectors of the second precision. Refer to the following step 1405 to step 1407.

Step 1405: Split the first column vector into X second column vectors, and split the first row vector into X second row vectors. Precision of element values included in the first column vector and the first row vector is the first precision, precision of element values included in the second column vector and the second row vector is the second precision, the first precision is higher than the second precision, and X is an integer greater than or equal to 2.

For this step, refer to the specific descriptions in which the format conversion unit 405 splits the integer number and the format conversion unit 405 splits the floating point value in the examples corresponding to FIG. 10 and FIG. 11 in the foregoing embodiment of the matrix calculation apparatus. Details are not described herein again.

Step 1406: Calculate vector outer products of the X second column vectors and the X second row vectors to obtain $X^2$ fourth matrices, where the fourth matrix includes fourth element values and position coordinates of the fourth element values, the position coordinates of the fourth element values include the row coordinates of the first element values and the column coordinates of the second element values, and precision of the fourth element values is the first precision.

For this step, refer to the descriptions of the function performed by the vector outer product processing engine 401 in the example corresponding to FIG. 12 in the foregoing embodiment of the matrix calculation apparatus. Details are not described herein again.

Step 1407: Accumulate, based on indexes of the position coordinates of the fourth element values, fourth element values with same position coordinates in the $X^2$ fourth matrices, to obtain the intermediate result matrix, where precision of the third element values in the intermediate result matrix is the first precision.

Step 1408: Accumulate, based on indexes of the position coordinates of the third element values, third element values with same position coordinates in the N intermediate result matrices, to obtain a result matrix.

For step 1407 and step 1408, refer to functions performed by the accumulator 402 in the examples corresponding to FIG. 5E, FIG. 6, and FIG. 8 in the foregoing embodiment of the matrix calculation apparatus. Details are not described herein again.

In this embodiment of this application, when a vector outer product of two vectors is calculated, a first-precision (high-precision) vector may be further split into a plurality of second-precision (low-precision) vectors, and then vector outer product calculation is performed on the low-precision vectors, so that an outer product of the first-precision vector may be obtained by accumulating outer product results of the plurality of second-precision vectors, without losing precision.

An embodiment of this application provides a matrix calculation circuit. The matrix calculation circuit is configured to perform one or more steps in step 1301 to step 1303 or one or more steps in step 1401 to step 1408 in the foregoing method embodiments. In actual application, the matrix calculation circuit may be an ASIC, an FPGA, a logic circuit, or the like.

Another embodiment of this application provides a matrix calculation system or a chip. A structure of the system or the chip may be shown in FIG. 3, and includes a processor (using a central processing unit as an example) 1 and a matrix calculation apparatus 1. The processor 1 is configured to send a calculation instruction to the matrix calculation apparatus 1. The matrix calculation apparatus 2 is configured to perform one or more steps in step 1301 to step 1303 or one or more steps in step 1401 to step 1408 in the foregoing method embodiments.

Still another embodiment of this application provides a matrix calculation device. A structure of the device may be shown in FIG. 2. The device may be specifically a PCIe card, an SoC, a processor, a server including the foregoing hardware, and the like. Refer to FIG. 2. The device includes a memory 201, a processor 202, a communication interface 203, and a bus 204. The communication interface 203 may include an input interface and an output interface.

The processor 202 may be configured to perform one or more steps in step 1301 to step 1303 or one or more steps in step 1401 to step 1408 in the foregoing method embodiments. In some feasible embodiments, the processor 202 may include a matrix calculation unit, and the matrix calculation unit may be configured to support the processor in performing one or more steps in the foregoing method embodiments. In actual application, the matrix calculation unit may be an ASIC, an FPGA, a logic circuit, or the like. Certainly, the matrix calculation unit may alternatively be implemented by using software. This is not specifically limited in this embodiment of this application.

It should be noted that the components of the matrix calculation circuit, the matrix calculation system, the matrix calculation device, and the like provided in embodiments of this application are separately configured to implement functions of corresponding steps in the foregoing method embodiments. Because the steps are described in detail in the foregoing method embodiments, details are not described herein again.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A matrix calculation apparatus, comprising a vector outer product processing engine and an accumulator, wherein

   the vector outer product processing engine is configured to calculate vector outer products of N first column vectors and N first row vectors, to obtain N intermediate result matrices, wherein the first column vector comprises first element values and row coordinates of the first element values, the first row vector comprises second element values and column coordinates of the second element values, the intermediate result matrix comprises third element values and position coordinates of the third element values, the position coordinates comprise the row coordinates $^{+}$ of the first element values and the column coordinates of the second element values, the N first column vectors are obtained by converting a first matrix in a compressed format, the N first row vectors are obtained by converting a second matrix in the compressed format, and N is an integer greater than or equal to 1; and
   the accumulator is configured to accumulate, based on indexes of the position coordinates of the third element values, third element values with same position coordinates in the N intermediate result matrices, to obtain a result matrix.

2. The apparatus according to claim 1, wherein the N intermediate result matrices comprise at least a first intermediate result matrix and a second intermediate result matrix, position coordinates of third element values in the first intermediate result matrix are first position coordinates, and position coordinates of third element values in the second intermediate result matrix are second position coordinates; and
   the accumulator is further specifically configured to:

   write, in a generation sequence of the N intermediate result matrices, the third element values in the first intermediate result matrix into corresponding positions in a cache based on the first position coordinates; and
   read, based on the second position coordinates of the third element values in the second intermediate result matrix, cached values that are at positions corresponding to the second position coordinates in the cache, and accumulate the third element values in the second intermediate result matrix and the cached values, to obtain a result matrix in an uncompressed format.

3. The apparatus according to claim 2, wherein the apparatus further comprises a matrix compression unit, wherein the matrix compression unit is configured to compress the result matrix in the uncompressed format to obtain a result matrix in a compressed format.

4. The apparatus according to claim 1, wherein the accumulator is further specifically configured to:

sort third element values in the N intermediate result matrices based on position coordinates of the third element values; and
compare position coordinates in N intermediate result matrices obtained through sorting, add up third element values with same position coordinates, and delete position coordinates of a zero-element value, to obtain a result matrix in a compressed format.

5. The apparatus according to claim 1, wherein the apparatus further comprises a format conversion unit, wherein the format conversion unit is configured to: obtain the first matrix and the second matrix, convert the first matrix into the N first column vectors, and convert the second matrix into the N first row vectors.

6. The apparatus according to claim 5, wherein the apparatus further comprises the format conversion unit, wherein the format conversion unit is further configured to: obtain a fifth matrix and a sixth matrix, perform format conversion on the fifth matrix to obtain the first matrix, and perform format conversion on the sixth matrix to obtain the second matrix, wherein at least one of the fifth matrix and the sixth matrix is a matrix in an uncompressed format.

7. The apparatus according to any one of claims 1 to 6, wherein precision of element values comprised in the first column vector and the first row vector is first precision;

the vector outer product processing engine is further configured to calculate vector outer products of X second column vectors and X second row vectors to obtain $X^2$ fourth matrices, wherein the fourth matrix comprises fourth element values and position coordinates of the fourth element values, the position coordinates of the fourth element values comprise the row coordinates of the first element values and the column coordinates of the second element values, and precision of the fourth element values is the first precision, wherein the X second column vectors are obtained by splitting the first column vector, the X second row vectors are obtained by splitting the first row vector, precision of element values comprised in the second column vector and the second row vector is second precision, the first precision is higher than the second precision, and X is an integer greater than or equal to 2; and
the accumulator is further configured to accumulate, based on indexes of the position coordinates of the fourth element values, fourth element values with same position coordinates in the $X^2$ fourth matrices, to obtain the intermediate result matrix, wherein precision of the third element values in the intermediate result matrix is the first precision.

8. A matrix calculation method, wherein the method is applied to a matrix calculation apparatus, and the method comprises:

obtaining a first calculation instruction, wherein the first calculation instruction comprises N first column vectors and N first row vectors;
calculating vector outer products of the N first column vectors and the N first row vectors, to obtain N intermediate result matrices, wherein the first column vector comprises first element values and row coordinates of the first element values, the first row vector comprises second element values and column coordinates of the second element values, the intermediate result matrix comprises third element values and position coordinates of the third element values, the position coordinates comprise the row coordinates of the first element values and the column coordinates of the second element values, the N first column vectors are obtained by converting a first matrix in a compressed format, the N first row vectors are obtained by converting a second matrix in the compressed format, and N is an integer greater than or equal to 1; and
accumulating, based on indexes of the position coordinates of the third element values, third element values with same position coordinates in the N intermediate result matrices, to obtain a result matrix.

9. The method according to claim 8, wherein the N intermediate result matrices comprise at least a first intermediate result matrix and a second intermediate result matrix, position coordinates of third element values in the first intermediate result matrix are first position coordinates, and position coordinates of third element values in the second intermediate result matrix are second position coordinates; and

the accumulating, based on indexes of the position coordinates of the third element values, third element values with same position coordinates in the N intermediate result matrices, to obtain a result matrix comprises:

writing, in a generation sequence of the N intermediate result matrices, the third element values in the first intermediate result matrix into corresponding positions in a cache based on the first position coordinates; and

reading, based on the second position coordinates of the third element values in the second intermediate result matrix, cached values that are at positions corresponding to the second position coordinates in the cache, and accumulating the third element values in the second intermediate result matrix and the cached values, to obtain a result matrix in an uncompressed format.

10. The method according to claim 9, wherein the method further comprises:
compressing the result matrix in the uncompressed format to obtain a result matrix in a compressed format.

11. The method according to claim 8, wherein the accumulating, based on indexes of the position coordinates of the third element values, third element values with same position coordinates in the N intermediate result matrices, to obtain a result matrix comprises:

sorting third element values in the N intermediate result matrices based on position coordinates of the third element values; and

comparing position coordinates in N intermediate result matrices obtained through sorting, adding up third element values with same position coordinates, and deleting position coordinates of a zero-element value, to obtain a result matrix in a compressed format.

12. The method according to claim 8, wherein before the obtaining a first calculation instruction, the method further comprises:

obtaining a second calculation instruction, wherein the second calculation instruction comprises the first matrix and the second matrix; and

converting the first matrix into the N first column vectors, and converting the second matrix into the N first row vectors.

13. The method according to claim 12, wherein before the obtaining a second calculation instruction, the method further comprises:

obtaining a third calculation instruction, wherein the third calculation instruction comprises a fifth matrix and a sixth matrix, and at least one of the fifth matrix and the sixth matrix is a matrix in an uncompressed format; and

performing format conversion on the fifth matrix to obtain the first matrix in the compressed format, and performing format conversion on the sixth matrix to obtain the second matrix.

14. The method according to any one of claims 8 to 13, wherein precision of element values comprised in the first column vector and the first row vector is first precision;

the calculating vector outer products of the N first column vectors and the N first row vectors, to obtain N intermediate result matrices comprises:

calculating vector outer products of X second column vectors and X second row vectors to obtain $X^2$ fourth matrices, wherein the fourth matrix comprises fourth element values and position coordinates of the fourth element values, the position coordinates of the fourth element values comprise the row coordinates of the first element values and the column coordinates of the second element values, and precision of the fourth element values is the first precision, wherein the X second column vectors are obtained by splitting the first column vector, the X second row vectors are obtained by splitting the first row vector, precision of element values comprised in the second column vector and the second row vector is second precision, the first precision is higher than the second precision, and X is an integer greater than or equal to 2; and

the method further comprises:

accumulating, based on indexes of the position coordinates of the fourth element values, fourth element values with same position coordinates in the $X^2$ fourth matrices, to obtain the intermediate result matrix, wherein precision of the third element values in the intermediate result matrix is the first precision.

15. A matrix calculation circuit, wherein the matrix calculation circuit is configured to perform the method according to any one of claims 8 to 14.

16. A matrix calculation system, wherein the system comprises a processor and a matrix calculation apparatus, the processor is configured to send a calculation instruction to the matrix calculation apparatus, and the matrix calculation apparatus is configured to perform the method according to any one of claims 8 to 14.

17. A chip, wherein the chip comprises a processor, a matrix calculation apparatus is integrated into the processor, and the matrix calculation apparatus is configured to perform the matrix calculation method according to any one of claims 8 to 14.

18. A matrix calculation device, wherein the device comprises the matrix calculation system according to claim 16 or the chip according to claim 17.

| 1 | 2 | 0 | 0 |
|---|---|---|---|
| 0 | 3 | 4 | 0 |
| 5 | 0 | 6 | 7 |
| 0 | 8 | 0 | 9 |

Matrix Y

| 0 | 0 | 1 | 1 | 2 | 2 | 2 | 3 | 3 |
|---|---|---|---|---|---|---|---|---|
| 0 | 1 | 1 | 2 | 0 | 2 | 3 | 1 | 3 |
| 1 | 2 | 3 | 4 | 5 | 6 | 7 | 8 | 9 |

Row coordinate

Column coordinate

Element value

Triplet

FIG. 1A

| 1 | 2 | 0 | 0 |
|---|---|---|---|
| 0 | 3 | 4 | 0 |
| 5 | 0 | 6 | 7 |
| 0 | 8 | 0 | 9 |

Matrix Y

| 1 | 2 | 3 | 4 | 5 | 6 | 7 | 8 | 9 |
|---|---|---|---|---|---|---|---|---|

Element value

| 0 | 1 | 2 | 3 | 4 | 5 | 6 | 7 | 8 |
|---|---|---|---|---|---|---|---|---|

Offset index

Row offset

Total quantity of element values

| 0 | 2 | 4 | 7 | 9 |
|---|---|---|---|---|

| 0 | 1 | 1 | 2 | 0 | 2 | 3 | 1 | 3 |
|---|---|---|---|---|---|---|---|---|

| 1 | 2 | 3 | 4 | 5 | 6 | 7 | 8 | 9 |
|---|---|---|---|---|---|---|---|---|

Column coordinate

Element value

| 1 | 2 |
|---|---|

0

| 3 | 4 |
|---|---|

2

| 5 | 6 | 7 |
|---|---|---|

4

| 8 | 9 |
|---|---|

7

FIG. 1B

FIG. 1C

Computing device

203

Communication interface

202

Processor

204

201

Memory

FIG. 2

Central processing unit 1

Controller 11

Arithmetic logic unit

Arithmetic logic unit

12

Cache 13

Matrix calculation apparatus 2

Memory management unit 14

Dynamic random access memory 201

( a )

Central processing unit 1

Arithmetic logic unit

Arithmetic logic unit

Controller 11

Cache 13

Memory management unit 14

Matrix calculation apparatus 2

Dynamic random access memory 201

( b )

FIG. 3

Matrix calculation apparatus

Vector outer product processing engine 401

Accumulator 402

First cache 403

Second cache 406

Format conversion unit 405

FIG. 4A

FIG. 4B

MAC operation subunit

First
element
value

Sign
subunit
40112

40113
Exponent
subunit

40114
Integer
subunit

40115
Precision
format
conversion
subunit

Third
element
value

Second
element
value

FIG. 4C

FIG. 4D

FIG. 4E

$A_0$  $A_1$  $A_2$  $A_3$

Matrix A

| $a_0$ | $c_0$ | $e_0$ | $g_0$ |
| $a_1$ | $c_1$ | $e_1$ | $g_1$ |
| $a_2$ | $c_2$ | $e_2$ | $g_2$ |
| $a_3$ | $c_3$ | $e_3$ | $g_3$ |
| $A_0$ | $A_1$ | $A_2$ | $A_2$ |

$B_0$  $B_1$  $B_2$  $B_3$

Matrix B

| | | | | |
|---|---|---|---|---|
| $B_0$ | $b_0$ | $b_1$ | $b_2$ | $b_3$ |
| $B_1$ | $d_0$ | $d_1$ | $d_2$ | $d_3$ |
| $B_2$ | $f_0$ | $f_1$ | $f_2$ | $f_3$ |
| $B_3$ | $h_0$ | $h_1$ | $h_2$ | $h_3$ |

FIG. 5A

$B_0$ →

$B_1$ →

$B_2$ →

$B_3$ →

$A_0$     $A_1$     $A_2$     $A_3$

$C_0$

$C_1$

$C_2$

$C_3$

FIG. 5B

| $b_0$ | $b_1$ | $b_2$ | $b_3$ |  $B_0$ |

$j_0$ $j_1$ $j_2$ $j_3$

$a_0$ — $i_0$

$a_1$ — $i_1$

$a_2$ — $i_2$

$a_3$ — $i_3$

$A_0$

| $a_0b_0$ | $a_0b_1$ | $a_0b_2$ | $a_0b_3$ |
|---|---|---|---|
| $(i_0, j_0)$ | $(i_0, j_1)$ | $(i_0, j_2)$ | $(i_0, j_3)$ |
| $a_1b_0$ | $a_1b_1$ | $a_1b_2$ | $a_1b_3$ |
| $(i_1, j_0)$ | $(i_1, j_1)$ | $(i_1, j_2)$ | $(i_1, j_3)$ |
| $a_2b_0$ | $a_2b_1$ | $a_2b_2$ | $a_2b_3$ |
| $(i_2, j_0)$ | $(i_2, j_1)$ | $(i_2, j_2)$ | $(i_2, j_3)$ |
| $a_3b_0$ | $a_3b_1$ | $a_3b_2$ | $a_3b_3$ |
| $(i_3, j_0)$ | $(i_3, j_1)$ | $(i_3, j_2)$ | $(i_3, j_3)$ |

Intermediate result matrix $C_0$

◯ Row coordinate

△ Column coordinate

( ) Position coordinates

FIG. 5C

| $d_0$ | $d_1$ | $d_2$ | $d_3$ | $B_1$ |

$l_0$  $l_1$  $l_2$  $l_3$

$c_0$ --- $k_0$

$c_1$ --- $k_1$

$c_2$ --- $k_2$

$c_3$ --- $k_3$

$A_1$

| $c_0d_0$ $(k_0, l_0)$ | $c_0d_1$ $(k_0, l_1)$ | $c_0d_2$ $(k_0, l_2)$ | $c_0d_3$ $(k_0, l_3)$ |
|---|---|---|---|
| $c_1d_0$ $(k_1, l_0)$ | $c_1d_1$ $(k_1, l_1)$ | $c_1d_2$ $(k_1, l_2)$ | $c_1d_3$ $(k_1, l_3)$ |
| $c_2d_0$ $(k_2, l_0)$ | $c_2d_1$ $(k_2, l_1)$ | $c_2d_2$ $(k_2, l_2)$ | $c_2d_3$ $(k_2, l_3)$ |
| $c_3d_0$ $(k_3, l_0)$ | $c_3d_1$ $(k_3, l_1)$ | $c_3d_2$ $(k_3, l_2)$ | $c_3d_3$ $(k_3, l_3)$ |

Intermediate result matrix $C_1$

◯   Row coordinate

△   Column coordinate

( )   Position coordinates

FIG. 5D

Same position
coordinates

Intermediate
result matrix $C_0$

Intermediate
result matrix $C_1$

Intermediate
result matrix $C_2$

Intermediate
result matrix $C_3$

Result matrix

FIG. 5E

| $a_0b_0$ | $a_0b_1$ | $a_0b_2$ | $a_0b_3$ |
|---|---|---|---|
| $(i_0, j_0)$ | $(i_0, j_1)$ | $(i_0, j_2)$ | $(i_0, j_3)$ |
| $a_1b_0$ | $a_1b_1$ | $a_1b_2$ | $a_1b_3$ |
| $(i_1, j_0)$ | $(i_1, j_1)$ | $(i_1, j_2)$ | $(i_1, j_3)$ |
| $a_2b_0$ | $a_2b_1$ | $a_2b_2$ | $a_2b_3$ |
| $(i_2, j_0)$ | $(i_2, j_1)$ | $(i_2, j_2)$ | $(i_2, j_3)$ |
| $a_3b_0$ | $a_3b_1$ | $a_3b_2$ | $a_3b_3$ |
| $(i_3, j_0)$ | $(i_3, j_1)$ | $(i_3, j_2)$ | $(i_3, j_3)$ |

Intermediate result
matrix $C_0$

| $c_0d_0$ | $c_0d_1$ | $c_0d_2$ | $c_0d_3$ |
|---|---|---|---|
| $(k_0, l_0)$ | $(k_0, l_1)$ | $(k_0, l_2)$ | $(k_0, l_3)$ |
| $c_1d_0$ | $c_1d_1$ | $c_1d_2$ | $c_1d_3$ |
| $(k_1, l_0)$ | $(k_1, l_1)$ | $(k_1, l_2)$ | $(k_1, l_3)$ |
| $c_2d_0$ | $c_2d_1$ | $c_2d_2$ | $c_2d_3$ |
| $(k_2, l_0)$ | $(k_2, l_1)$ | $(k_2, l_2)$ | $(k_2, l_3)$ |
| $c_3d_0$ | $c_3d_1$ | $c_3d_2$ | $c_3d_3$ |
| $(k_3, l_0)$ | $(k_3, l_1)$ | $(k_3, l_2)$ | $(k_3, l_3)$ |

Intermediate result matrix $C_1$

Cache

FIG. 6

Matrix calculation apparatus

Vector outer product processing engine 401 — Accumulator 402 — First cache 403

Matrix compression unit 404

FIG. 7

| $a_0b_0$ | $a_0b_1$ | $a_0b_2$ | $a_0b_3$ |
|---|---|---|---|
| $(i_0, j_0)$ | $(i_0, j_1)$ | $(i_0, j_2)$ | $(i_0, j_3)$ |
| $a_1b_0$ | $a_1b_1$ | $a_1b_2$ | $a_1b_3$ |
| $(i_1, j_0)$ | $(i_1, j_1)$ | $(i_1, j_2)$ | $(i_1, j_3)$ |
| $a_2b_0$ | $a_2b_1$ | $a_2b_2$ | $a_2b_3$ |
| $(i_2, j_0)$ | $(i_2, j_1)$ | $(i_2, j_2)$ | $(i_2, j_3)$ |
| $a_3b_0$ | $a_3b_1$ | $a_3b_2$ | $a_3b_3$ |
| $(i_3, j_0)$ | $(i_3, j_1)$ | $(i_3, j_2)$ | $(i_3, j_3)$ |

Intermediate result matrix $C_0$

| $c_0d_0$ | $c_0d_1$ | $c_0d_2$ | $c_0d_3$ |
|---|---|---|---|
| $(k_0, l_0)$ | $(k_0, l_1)$ | $(k_0, l_2)$ | $(k_0, l_3)$ |
| $c_1d_0$ | $c_1d_1$ | $c_1d_2$ | $c_1d_3$ |
| $(k_1, l_0)$ | $(k_1, l_1)$ | $(k_1, l_2)$ | $(k_1, l_3)$ |
| $c_2d_0$ | $c_2d_1$ | $c_2d_2$ | $c_2d_3$ |
| $(k_2, l_0)$ | $(k_2, l_1)$ | $(k_2, l_2)$ | $(k_2, l_3)$ |
| $c_3d_0$ | $c_3d_1$ | $c_3d_2$ | $c_3d_3$ |
| $(k_3, l_0)$ | $(k_3, l_1)$ | $(k_3, l_2)$ | $(k_3, l_3)$ |

Intermediate result matrix $C_1$

| $a_0b_0$ | $a_0b_1$ | $a_0b_2$ | $a_0b_3$ | $a_1b_0$ | $a_1b_1$ | ... | $a_3b_3$ |
|---|---|---|---|---|---|---|---|
| $i_0j_0$ | $i_0j_1$ | $i_0j_2$ | $i_0j_3$ | $i_1j_0$ | $i_1j_1$ | ... | $i_1j_3$ |

| $k_0l_0$ | $k_0l_1$ | $k_0l_2$ | $k_0l_3$ | $k_1l_0$ | $k_1l_1$ | ... | $k_3l_3$ |
|---|---|---|---|---|---|---|---|
| $c_0d_0$ | $c_0d_1$ | $c_0d_2$ | $c_0d_3$ | $c_1d_0$ | $c_1d_1$ | ... | $c_3d_3$ |

☐ Element value

☐ Position coordinates

FIG. 8

Fifth matrix in an
uncompressed
format

First matrix in a
compressed format

Element
value

First column
vector

Row
coordinate

Format
conversion
unit 405

Second
cache
406

Vector outer
product
processing
engine 401

First row
vector

Sixth matrix in an
uncompressed format

Second matrix in a
compressed format

■ Zero element

☐ Non-zero element

FIG. 9

Int16                                    Int16

Int32

Int8              Int8              Int8              Int8

Int32

FIG. 10

FIG. 11

○ Row coordinate

△ Column coordinate

( ) Position coordinates

Second row vector 1 →

| $b_{0M}$ | $b_{1M}$ | $b_{2M}$ | $b_{3M}$ |

Second row vector 2 →

| $b_{0L}$ | $b_{1L}$ | $b_{2L}$ | $b_{3L}$ |

$j_0$  $j_1$  $j_2$  $j_3$

Second column vector 1

| $a_{0M}$ | $a_{0L}$ | $i_0$ |
| $a_{1M}$ | $a_{1L}$ | $i_1$ |
| $a_{2M}$ | $a_{2L}$ | $i_2$ |
| $a_{3M}$ | $a_{3L}$ | $i_3$ |

Second column vector 2

Vector outer product

Fourth matrix 1

Fourth matrix 2

Fourth matrix 3

Fourth matrix 4

| $a_{0M}b_{0M}$ $(i_0, j_0)$ | $a_{0M}b_{0M}$ $(i_0, j_1)$ | $a_{0M}b_{0M}$ $(i_0, j_2)$ | $a_{0M}b_{0M}$ $(i_0, j_3)$ |
|---|---|---|---|
| $a_{1M}b_{1M}$ $(i_1, j_0)$ | $a_{1M}b_{1M}$ $(i_1, j_1)$ | $a_{1M}b_{1M}$ $(i_1, j_2)$ | $a_{1M}b_{1M}$ $(i_1, j_3)$ |
| $a_{2M}b_{2M}$ $(i_2, j_0)$ | $a_{2M}b_{2M}$ $(i_2, j_1)$ | $a_{2M}b_{2M}$ $(i_2, j_2)$ | $a_{2M}b_{2M}$ $(i_2, j_3)$ |
| $a_{3M}b_{3M}$ $(i_3, j_0)$ | $a_{3M}b_{3M}$ $(i_3, j_1)$ | $a_{3M}b_{3M}$ $(i_3, j_2)$ | $a_{3M}b_{3M}$ $(i_3, j_3)$ |

FIG. 12

Obtain a first calculation instruction, where the first calculation instruction includes N first column vectors and N first row vectors

〜 1301

Calculate vector outer products of the N first column vectors and the N first row vectors, to obtain N intermediate result matrices, where the first column vector includes first element values and row coordinates of the first element values, the first row vector includes second element values and column coordinates of the second element values, the intermediate result matrix includes third element values and position coordinates of the third element values, and the position coordinates include the row coordinates of the first element values and the column coordinates of the second element values

〜 1302

Accumulate, based on indexes of the position coordinates of the third element values, third element values with same position coordinates in the N intermediate result matrices, to obtain a result matrix

〜 1303

FIG. 13

Obtain a third calculation instruction, where the third calculation instruction includes a fifth matrix and a sixth matrix, and at least one of the fifth matrix and the sixth matrix is a matrix in an uncompressed format $\sim 1401$

Perform format conversion on the fifth matrix to obtain a first matrix in a compressed format, and perform format conversion on the sixth matrix to obtain a second matrix $\sim 1402$

Obtain a second calculation instruction, where the second calculation instruction includes the first matrix and the second matrix $\sim 1403$

Convert the first matrix into N first column vectors, and convert the second matrix into N first row vectors $\sim 1404$

Split the first column vector into X second column vectors, and split the first row vector into X second row vectors $\sim 1405$

Calculate vector outer products of the X second column vectors and the X second row vectors to obtain $X^2$ fourth matrices, where the fourth matrix includes fourth element values and position coordinates of the fourth element values, the position coordinates of the fourth element values include row coordinates of first element values and column coordinates of second element values, and precision of the fourth element values is first precision $\sim 1406$

Accumulate, based on indexes of the position coordinates of the fourth element values, fourth element values with same position coordinates in the $X^2$ fourth matrices, to obtain an intermediate result matrix, where precision of third element values in the intermediate result matrix is the first precision $\sim 1407$

Accumulate, based on indexes of position coordinates of the third element values, third element values with same position coordinates in N intermediate result matrices, to obtain a result matrix $\sim 1408$

FIG. 14

## INTERNATIONAL SEARCH REPORT

| International application No. |
|---|
| **PCT/CN2021/141000** |

### A. CLASSIFICATION OF SUBJECT MATTER

G06F 17/16(2006.01)i; G06F 9/30(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 压缩矩阵, 稀疏矩阵, 向量, 外积, 张量积, 乘积, 行坐标, 列坐标, 累加, COO, CSR, CSC, ACC, matrix, row, column, vector outer product, coordinate, compressed sparse row, compressed sparse column, row vector, column vector, accumulator

### C. DOCUMENTS CONSIDERED TO BE RELEVANT

| Category* | Citation of document, with indication, where appropriate, of the relevant passages | Relevant to claim No. |
|---|---|---|
| X | 郑金华 (ZHENG, Jinhua). "稀疏矩阵的存储结构和乘法运算 (Store Structure and Multiply Operation of Sparse Matrices)" 湘潭大学自然科学学报 (Natural Science Journal of Xiangtan University), Vol. 16, No. 2, 30 June 1994 (1994-06-30), pp. 133-136 | 1-18 |
| A | CN 109857744 A (SHANGHAI SUIYUAN INTELLIGENT TECHNOLOGY CO., LTD. et al.) 07 June 2019 (2019-06-07) entire document | 1-18 |
| A | CN 103106183 A (FUJIAN TQ DIGITAL CO., LTD.) 15 May 2013 (2013-05-15) entire document | 1-18 |
| A | CN 107665126 A (MICROUNITY SYSTEMS ENGINEERING, INC.) 06 February 2018 (2018-02-06) entire document | 1-18 |
| A | US 2019278600 A1 (NVIDIA CORPORATION) 12 September 2019 (2019-09-12) entire document | 1-18 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 March 2022** | **22 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/141000** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2018032312 A1 (MICROUNITY SYSTEMS ENGINEERING, INC.) 01 February 2018 (2018-02-01)<br>       entire document | 1-18 |

Form PCT/ISA/210 (second sheet) (January 2015)

**INTERNATIONAL SEARCH REPORT**
Information on patent family members

| International application No. |
| --- |
| **PCT/CN2021/141000** |

| Patent document cited in search report | | | Publication date (day/month/year) | Patent family member(s) | | | Publication date (day/month/year) |
| --- | --- | --- | --- | --- | --- | --- | --- |
| CN | 109857744 | A | 07 June 2019 | None | | | |
| CN | 103106183 | A | 15 May 2013 | None | | | |
| CN | 107665126 | A | 06 February 2018 | EP | 3276486 | A1 | 31 January 2018 |
| | | | | US | 2019065149 | A1 | 28 February 2019 |
| | | | | US | 2018032312 | A1 | 01 February 2018 |
| | | | | JP | 2018055677 | A | 05 April 2018 |
| US | 2019278600 | A1 | 12 September 2019 | None | | | |
| US | 2018032312 | A1 | 01 February 2018 | EP | 3276486 | A1 | 31 January 2018 |
| | | | | CN | 107665126 | A | 06 February 2018 |
| | | | | US | 2019065149 | A1 | 28 February 2019 |
| | | | | US | 10120649 | B2 | 06 November 2018 |
| | | | | JP | 2018055677 | A | 05 April 2018 |

Form PCT/ISA/210 (patent family annex) (January 2015)